(19) **Europäisches Patentamt**
**European Patent Office**
**Office européen des brevets**

(11) **EP 2 672 434 A1**

(12) **EUROPEAN PATENT APPLICATION**
published in accordance with Art. 153(4) EPC

(43) Date of publication:
**11.12.2013 Bulletin 2013/50**

(51) Int Cl.:
***G06Q 10/00*** (2012.01)     ***H04M 11/00*** (2006.01)

(21) Application number: **12742572.6**

(22) Date of filing: **24.01.2012**

(86) International application number:
**PCT/JP2012/051456**

(87) International publication number:
**WO 2012/105378 (09.08.2012 Gazette 2012/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.01.2011  JP 2011018865**
**06.04.2011  JP 2011084797**

(71) Applicant: **NTT DOCOMO, INC.**
**Chiyoda-ku,**
**Tokyo 100-6150 (JP)**

(72) Inventors:
• **TERADA Masayuki**
**Tokyo 100-6150 (JP)**
• **NAGATA Tomohiro**
**Tokyo 100-6150 (JP)**
• **AOYAGI Sadanori**
**Tokyo 100-6150 (JP)**
• **OKAJIMA Ichiro**
**Tokyo 100-6150 (JP)**

(74) Representative: **Viering, Jentschura & Partner**
**Am Brauhaus 8**
**01099 Dresden (DE)**

(54) **UNIQUE-TERMINAL-COUNT ESTIMATION DEVICE AND UNIQUE-TERMINAL-COUNT ESTIMATION METHOD**

(57)     A terminal-entry-count estimation device (10) includes: an extraction unit (12) for extracting a terminal estimated to be located in an observation area during at least a part of an observation period, or a piece of location data generated by the terminal in the observation period or in an extended period extended by a predetermined width from the observation period, based on location data which includes identification information to identify each terminal, location information about a location of the terminal, and acquisition time information when the location information is acquired and of which an acquisition time is within the observation period or within the extended period; and a terminal-entry-count estimation unit (15) for estimating a terminal-entry-count in the observation area during the observation period, based on the number of extracted location data or the number of extracted terminals.

*Fig.2*

**Description**

**Technical Field**

The present invention relates to a terminal-entry-count estimation device and a terminal-entry-count estimation method to estimate a terminal-entry-count of terminals located in a certain area during an observation period, and others, using location information about mobile terminals (e.g., cell phones) obtained from network facilities of the mobile terminals.

In the present specification, "terminal-entry-count" means a unique entry count of terminals located in an observation area during at least a part of an observation period, and "person-entry-count" means a unique entry count of persons located in the observation area during at least a part of the observation period. The term "unique" herein refers to a count (the number) obtained after removal of redundant counts of each identical terminal or each identical person. Furthermore, "total-terminal-entry-count" means a cumulative sum along a time axis about the terminal-entry-count in the observation area during the observation period, and, for example, when the terminal-entry-count in the observation area along time t is expressed by function f(t), the total-terminal-entry-count can be obtained as a value of an integral of the terminal-entry-count f(t) from an observation start time $t_0$ to an observation end time $t_1$, in the unit of (number of terminals x time).

In the present specification, "number of entering terminals" means the number of terminals entering the observation area during a certain period, and "number of entering persons" means the number of persons entering the observation area during a certain period. And "number of leaving terminals" means the number of terminals leaving the observation area during a certain period, and "number of leaving persons" means the number of persons leaving the observation area during a certain period. And "number of out/in terminals" means the number of terminals increasing or decreasing in the observation area during a certain period, of which a positive value represents an increase and of which a negative value represents a decrease. And "number of out/in persons" means the number of persons increasing or decreasing in the observation area during a certain period, of which a positive value represents an increase and of which a negative value represents a decrease.

**Background Art**

Conventional techniques for estimating a unique entry count of visitors located in a certain event site include, for example, a method of measuring the number of persons passing an entrance path to the event site by hand, a method of determining the number of passing persons, based on photographic image data obtained by photography with a fixed-point observation camera at a predetermined point (e.g., near an entrance) on the entrance path (cf. Patent Literature 1), and so on.

**Citation List**

**Patent Literature**

Patent Literature 1: Japanese Patent Application Laid-open No. 2010-33195

**Summary of Invention**

**Technical Problem**

However, the methods as described above had the problem that accurate estimation of the person-entry-count became difficult if there were many entrance paths to the event site, and the problem that reentering persons were doubly counted.

On the other hand, it is generally known that there is a certain correlation between the number of terminals carried by persons in a certain area and a population in the area at that point of time, and therefore there is a strong desire for first accurately estimating the terminal-entry-count, prior to accurate estimation of the person-entry-count.

The present invention has been accomplished in order to solve the above problem and it is an object of the present invention to realize accurate estimation of the terminal-entry-count.

**Solution to Problem**

A terminal-entry-count estimation device according to an aspect of the present invention is one comprising: an extraction unit for extracting a terminal estimated to be located in an observation area during at least a part of an observation period, or a piece of location data generated by the terminal within the observation period or within an extended period extended by a predetermined width from the observation period, based on location data which includes identification information to identify each terminal, location information about a location of the terminal, and acquisition time information when the location information is acquired and of which an acquisition time is within the observation period or within the extended period; and a terminal-entry-count estimation unit for estimating a terminal-entry-count in the observation area during the observation period, based on the number of extracted location data or the number of extracted terminals. The "location information" included in the location data can be, for example, a sector-number indicative of a sector acquired from a location registration signal, location positioning data acquired by a location information acquisition system such as the GPS positioning system or PRACH PD, and so on.

The extraction unit herein can be adopted from a variety of modes. For example, the extraction unit may operate as follows: the extraction unit calculates, for each terminal, an estimated visit duration of a visit of the terminal in the observation area, based on in-area location data of which the acquisition time is within the extended period and of which the location information indicates a location in the observation area, and out-of-area location data which is adjacent to the in-area location data in a chronological arrangement in an order of acquisition times and of which the location information indicates a location out of the observation area, among the location data about the same terminal; the extraction unit extracts a terminal of which the calculated estimated visit duration overlaps the observation period. In this case, the extraction unit may operate as follows: the extraction unit calculates, as the estimated visit duration, a period of which a start time is a time corresponding to a proportional division point between an acquisition time of a leading piece of in-area location data in the chronological arrangement and an acquisition time of a piece of out-of-area location data adjacent to the leading piece of in-area location data, and of which an end time is a time corresponding to a proportional division point between an acquisition time of a last piece of in-area location data in the chronological arrangement and an acquisition time of a piece of out-of-area location data adjacent to the last piece of in-area location data.

As another example, the extraction unit may operate as follows: the extraction unit extracts location data with an earliest acquisition time out of the location data of which the acquisition time is within the observation period and of which the location information indicates a location in the observation area, among the location data about the same terminal.

The terminal-entry-count estimation device as described above is configured to estimate the terminal-entry-count in the observation area during the observation period on the basis of the number of location data or the number of terminals extracted by the extraction unit, whereby it is able to accurately estimate the terminal-entry-count while avoiding double counting.

A terminal-entry-count estimation device according to another aspect of the present invention is one comprising: an extraction unit for extracting a piece of location data per terminal of which location information indicates a location in an observation area and of which an acquisition time is within an observation period, or a terminal corresponding to the location data, based on location data which includes identification information to identify each terminal, location information about a location of the terminal, and acquisition time information when the location information is acquired and of which an acquisition time is within the observation period or within an extended period extended by a predetermined width from the observation period; and a terminal-entry-count estimation unit for estimating a terminal-entry-count in the observation area during the observation period, based on the number of extracted location data or the number of extracted terminals.

Incidentally, the terminal-entry-count estimation device may further comprise: a total-terminal-entry-count estimation unit for estimating a total-terminal-entry-count that is a cumulative sum along a time axis about the terminal-entry-count in the observation area during the observation period, based on the location data of which the acquisition time is within the extended period; and a first-average-visit-duration calculation unit for calculating an average visit duration in the observation area during the observation period, based on the total-terminal-entry-count and the terminal-entry-count in the observation area during the observation period, obtained by estimation. In this case, the device is able to acquire the average visit duration in the observation area during the observation period.

The foregoing total-terminal-entry-count estimation unit may be configured including: a preceding and following location data acquisition unit for, concerning a piece of target location data, acquiring location acquisition time information of location data immediately preceding the target location data, and location acquisition time information of location data immediately following the target location data, from location data including the same identification information as that of the target location data; a feature amount calculation unit for calculating a feature amount on the target location data, based on at least two of the location acquisition time information of the immediately-preceding location data, the location acquisition time information of the target location data, and the location acquisition time information of the immediately-following location data; an observation target acquisition unit for acquiring, as observation target location data, one or more pieces of location data including location acquisition time information after an observation start time and before an observation end time about the observation period, and including location information associated with observation area information about the observation area; and a feature amount totalization unit for totalizing feature amounts on the observation target location data among the location data and estimating the total-terminal-entry-count in the observation area during the observation period, based on a total value of the feature amounts obtained. The "feature amount" is information corresponding to an estimated generation density on location data generated by a terminal, and the "estimated generation density" herein means an estimated value of the number of location data generated per unit time around a generation time (corresponding to the foregoing location acquisition time) of the location data by the terminal having generated the location data.

The terminal-entry-count estimation device may further comprise at least one of: a number-of-entering-terminals calculation unit for calculating a difference between respective terminal-entry-counts in the observation area in a first observation period and in a second observation period with the same start time, as the number of entering terminals into the observation area in a period between an end time of the first observation period and an end time of the second observation period; and a number-of-leaving-terminals calculation unit for calculating a difference between respective terminal-entry-counts in the observation area in a third observation period and in a fourth observation period with the same end time, as the number of leaving terminals from the observation area in a period between a start time of the third observation period and a start time of the fourth observation period. When the device comprises the number-of-entering-terminals calculation unit, it can calculate the difference between the respective terminal-entry-counts in the observation area in the first observation period and in the second observation period with the same start time, as the number of entering terminals into the observation area in the period between the end time of the first observation period and the end time of the second observation period. When the device comprises the number-of-leaving-terminals calculation unit, it can calculate the difference between the respective terminal-entry-counts in the observation area in the third observation period and in the fourth observation period with the same end time, as the number of leaving terminals from the observation area in the period between the start time of the third observation period and the start time of the fourth observation period.

When the terminal-entry-count estimation device comprises both of the number-of-entering-terminals calculation unit and the number-of-leaving-terminals calculation unit, it may further comprise a number-of outlin-terminals calculation unit for calculating a difference obtained by subtracting the number of leaving terminals from the number of entering terminals in the same period, as the number of out/in terminals, and in this case, the device is able to obtain the number of out/in terminals.

The terminal-entry-count estimation device may further comprise: a scaling factor derivation unit for deriving a scaling factor for converting a terminal-entry-count into a person-entry-count; and a person-entry-count estimation unit for estimating a person-entry-count in the observation area during the observation period, based on the scaling factor and the terminal-entry-count in the observation area during the observation period. In this case, the device is able to accurately estimate the person-entry-count in the observation area during the observation period. The foregoing scaling factor may be derived for each of population estimation units being units of estimation of the person-entry-count. The foregoing "population estimation units" can be, for example, attributes, places, time zones, and so on, and the population estimation units to be adopted may be prefectures of addresses, age groups of 5-year intervals, genders, time zones of one-hour intervals, and so on. The scaling factor can be, for example, a reciprocal of "a product of a presence rate and a terminal penetration rate (i.e., a ratio of a presence count to a population)". The "presence rate" herein means a ratio of a presence count to the number of subscriptions and the "penetration rate" a ratio of the number of subscriptions to a population. Such a scaling factor is preferably derived for each of the foregoing population estimation units, but it is not essential. The scaling factor may be derived, for example, using the number of terminals (presence count) estimated based on the feature amounts and the length of the observation period as follows. Namely, the feature amounts are calculated from the location data, number of terminals in respective scaling factor calculation units are totalized based on the feature amounts and the observation period length to obtain user count pyramid data, and population pyramid data in the same scaling factor calculation units preliminarily obtained as statistical data (e.g., the Basic Resident Register or the like) is acquired. Then an acquisition rate of location data (i.e., presence count/population) is calculated in each of the scaling factor calculation units with the user count pyramid data and the population pyramid data. The "acquisition rate of location data (i.e., presence count/population)" obtained herein corresponds to the aforementioned "product of a presence rate and a terminal penetration rate". A reciprocal of the "acquisition rate of location data" obtained in this manner can be derived as a scaling factor. The scaling factor calculation units for calculation of the scaling factor to be employed may be, for example, prefectures of addresses, age groups of 5-year or 10-year intervals, genders, time zones of one-hour intervals, and so on, or may be combinations of two or more of these. For example, when a scaling factor calculation unit is "men in their twenties residing in Tokyo", location data extracted is location data corresponding to men in their twenties residing in Tokyo (namely, of which the address information in user attributes is Tokyo) in the whole country of Japan; the number of terminals are totalized to obtain user count pyramid data; population pyramid data about men in their twenties residing in Tokyo is acquired from the statistical data. In obtaining the user count pyramid data, as to the condition of "residing in Tokyo", the device does not extract only the location data of users residing in Tokyo, but the device extracts the location data of which the address information in user attributes is Tokyo. Then the acquisition rate (i.e., presence count/population) of the location data in the scaling factor calculation unit (men in their twenties residing in Tokyo herein) is calculated from the user count pyramid data and the population pyramid data, and a reciprocal of the obtained "acquisition rate of location data" can be derived as a scaling factor. In the present specification the description is given on the assumption that the scaling factor calculation units are equal to the population estimation units, but it is just an example, without having to be limited to this example.

The terminal-entry-count estimation device may further comprise: a second-average-visit-duration calculation unit for acquiring a total population that is a cumulative sum along a time axis about a population in the observation area during the observation period, based on a demographic change in the observation area during the observation period, and calculating an average visit duration in the observation area during the observation period, based on the total population and the person-entry-count estimated by the person-entry-count estimation unit, and in this case, the device is able to acquire the average visit duration in the observation area during the observation period.

The terminal-entry-count estimation device may further comprise at least one of: a number-of-entering-persons calculation unit for calculating a difference between respective person-entry-counts in the observation area in a fifth observation period and in a sixth observation period with the same start time, as the number of entering persons into the observation area in a period between an end time of the fifth observation period and an end time of the sixth observation period; and a number-of-leaving-persons calculation unit for calculating a difference between respective person-entry-counts in the observation area in a seventh observation period and in an eighth observation period with the same end time, as the number of leaving persons from the observation area in a period between a start time of the seventh observation period and a start time of the eighth observation period. When the device comprises the number-of-entering-persons calculation unit, it is able to calculate the difference between the respective person-entry-counts in the observation area in the fifth observation period and in the sixth observation period with the same start time, as the number of entering persons into the observation area in the period between the end time of the fifth observation period and the end time of the sixth observation period. When the device comprises the number-of-leaving-persons calculation unit, it is able to calculate the difference between the respective person-entry-counts in the observation area in the seventh observation period and in the eighth observation period with the same end time, as the number of leaving persons from the observation area in the period between the start time of the seventh observation period and the start time of the eighth observation period.

The number-of-entering-persons calculation unit may calculate the number of entering persons after calculation of the number of entering terminals, as described below. Similarly, the number-of-leaving-persons calculation unit may calculate the number of leaving persons after calculation of the number of leaving terminals, as described below. Namely, the terminal-entry-count estimation device may further comprise at least one of: a number-of-entering-persons calculation unit for calculating a difference between respective terminal-entry-counts in the observation area in a ninth observation period and in a tenth observation period with the same start time, as the number of entering terminals into the observation area in a period between an end time of the ninth observation period and an end time of the tenth observation period, and calculating the number of entering persons into the observation area in the period between the end time of the ninth observation period and the end time of the tenth observation period, based on the scaling factor and the calculated number of entering terminals; and a number-of-leaving-persons calculation unit for calculating a difference between respective terminal-entry-counts in the observation area in an eleventh observation period and a twelfth observation period with the same end time, as the number of leaving terminals from the observation area in a period between a start time of the eleventh observation period and a start time of the twelfth observation period, and calculating the number of leaving persons from the observation area in the period between the start time of the eleventh observation period and the start time of the twelfth observation period, based on the scaling factor and the calculated number of leaving terminals.

When the terminal-entry-count estimation device comprises both of the number-of-entering-persons calculation unit and the number-of-leaving-persons calculation unit, it may further comprise a number-of-out/in-persons calculation unit for calculating a difference obtained by subtracting the number of leaving persons from the number of entering persons, as the number of out/in persons, and in this case, it is able to acquire the number of out/in persons.

The terminal-entry-count estimation device may further comprise a conversion unit for converting estimated values in respective observation areas obtained in estimation by the terminal-entry-count estimation unit or by the person-entry-count estimation unit, into estimated values in respective output units different from the observation areas, based on area ratios of overlap regions between the output units and the observation areas to the observation areas. The conversion unit may operate as follows: when there are at least two communication areas out of a communication area of an indoor station and communication areas of a plurality of outdoor stations using respective frequency bands with different coverage areas, overlapping in a geographically identical observation area, the conversion unit performs conversion into the estimated values in the respective output units based on the area ratios for each of the overlapping communication areas and addition of the estimated values after the conversion for each of the communication areas, thereby obtaining the estimated values in the respective output units.

The person-entry-count estimation unit may estimate person-entry-counts in respective output units and in respective population estimation units, based on terminal-entry-counts obtained in estimation, scaling factors for conversion of the terminal-entry-counts into person-entry-counts, and area ratios of overlap regions between the output units different from observation areas, and the observation areas to the observation areas.

The terminal-entry-count estimation device may further comprise an output device for outputting the estimated value obtained. An output mode by the output device to be employed is allowed to be at least one of a drawing showing respective distributions of a person-entry-count, the number of entering persons, the number of leaving persons, and the number of out/in persons and a drawing showing chronological changes thereof, and a drawing showing a chronological change of a cumulative sum of person-entry-counts; and an output unit by the output device is allowed to be set according to at least one of an attribute of a user of a mobile terminal, a time zone, and a place.

The terminal-entry-count estimation device may further comprise: a location data acquisition unit for acquiring the location data including the identification information to identify each terminal, the location information about the location of the terminal, and the acquisition time information when the location information is acquired; and an unidentifiability securing unit for performing an unidentifiability securing process including a conversion into irreversible code by a one-way function on the identification information included in the location data acquired by the location data acquisition unit, and the unidentifiability securing unit may operate as follows: when a process using attribute information of a user of a terminal is carried out, prior to the process, the unidentifiability securing unit performs the unidentifiability securing process on the attribute information.

The terminal-entry-count estimation device may further comprise: a concealment process unit for, before the estimated value obtained is output, performing a concealment process on the estimated value on the basis of a predetermined reference. In this case, the concealment process unit may operate as follows: the concealment process unit determines whether or not the number of source terminals indicative of from how many terminals the location data in each area as a basis of estimation of the terminal-entry-count was acquired, is less than a reference value for a determination on whether or not the concealment process is needed, and wherein when the number of source terminals of the location data in a given area is less than the reference value, the concealment process unit conceals the estimated value about the area. The foregoing number of source terminals represents a unique entry count of terminals without redundancy of identical terminals.

A method of the concealment to be adopted herein can be, for example, a method of setting the estimated value to zero, a method of expressing the estimated value by a predetermined letter or mark (e.g., "X" or the like), and so on. On the other hand, when the number of source terminals of the location data in a given area is not less than the reference value, the concealment process unit may be configured so as not to perform the concealment process on the estimated value or may perform rounding as described below. Namely, the concealment process unit may round the estimated value on the area, based on an upper limit value and a lower limit value of a class to which the estimated value on the area belongs out of a plurality of classes used in output of the estimated value, a class interval, and the estimated value, to the upper limit value and the lower limit value with respective probability values according to a difference from the upper limit value and a difference from the lower limit value.

The terminal-entry-count estimation device may further comprise: an observation period acquisition unit for acquiring observation period information including a set of an observation start time and an observation end time; and an observation area acquisition unit for acquiring observation area information associated with one or more pieces of location information.

The invention of the terminal-entry-count estimation devices described above can also be regarded as the invention of terminal-entry-count estimation methods executed by the terminal-entry-count estimation devices, with the same operation and effect.

Namely, a terminal-entry-count estimation method according to an aspect of the present invention is a terminal-entry-count estimation method executed by a terminal-entry-count estimation device, comprising: an extraction step of extracting a terminal estimated to be located in an observation area during at least a part of an observation period, or a piece of location data generated by the terminal within the observation period or within an extended period extended by a predetermined width from the observation period, based on location data which includes identification information to identify each terminal, location information about a location of the terminal, and acquisition time information when the location information is acquired and of which an acquisition time is within the observation period or within the extended period; and a terminal-entry-count estimation step of estimating a terminal-entry-count in the observation area during the observation period, based on the number of extracted location data or the number of extracted terminals.

A terminal-entry-count estimation method according to another aspect of the present invention is a terminal-entry-count estimation method executed by a terminal-entry-count estimation device, comprising: an extraction step of extracting a piece of location data per terminal of which location information indicates a location in an observation area and of which an acquisition time is within an observation period, or a terminal corresponding to the location data, based on location data which includes identification information to identify each terminal, location information about a location of the terminal, and acquisition time information when the location information is acquired and of which an acquisition time is within the observation period or within an extended period extended by a predetermined width from the observation period; and a terminal-entry-count estimation step of estimating a terminal-entry-count in the observation area during the observation period, based on the number of extracted location data or the number of extracted terminals.

**Advantageous Effect of Invention**

By the present invention, it is able to accurately estimate the terminal-entry-count while avoiding double counting.

**Brief Description of Drawings**

Fig. 1 is a drawing showing a system configuration of a communication system in each of embodiments.
Fig. 2 is a drawing showing a configuration of a terminal-entry-count estimation device in the first embodiment.
Fig. 3 is a flowchart showing a terminal-entry-count estimation process in the first embodiment.
Fig. 4 is a drawing for explaining a calculation method of an estimated visit duration.
Fig. 5 is a drawing for explaining an extraction method of location data.
Fig. 6 is a drawing showing a configuration of a terminal-entry-count estimation device in the second embodiment.
Fig. 7 is a flowchart showing a terminal-entry-count estimation process in the second embodiment.
Fig. 8 is a flowchart showing an estimation process of a total-terminal-entry-count.
Fig. 9 is a flowchart showing a feature amount calculation process.
Fig. 10 is a drawing for explaining a conception of total-terminal-entry-count estimation.
Fig. 11 is a drawing for explaining a calculation method related to total-terminal-entry-count estimation.
Fig. 12 is a drawing showing a configuration of a terminal-entry-count estimation device in the third embodiment.
Fig. 13 is a flowchart showing a process in the third  embodiment.
Fig. 14 is a drawing for explaining calculation methods of the number of entering terminals and the number of leaving terminals.
Fig. 15 is a drawing showing a configuration of a terminal-entry-count estimation device in the fourth and fifth embodiments.
Fig. 16 is a flowchart showing a process in the fourth embodiment.
Fig. 17 is a drawing showing an output example in the fourth and fifth embodiments.
Fig. 18 is a flowchart showing a process in the fifth embodiment.
Fig. 19 is a drawing showing a configuration of a terminal-entry-count estimation device in the sixth embodiment.
Fig. 20 is a drawing for explaining a combination of meshes and an area map.
Fig. 21 is a drawing for explaining calculation of areas and area ratios of respective divided areas.
Fig. 22 is a drawing for explaining calculation of the sum of populations in divided areas in a certain mesh.
Fig. 23 is a drawing for explaining an estimated value conversion process in the seventh embodiment.
Fig. 24 is a drawing showing a matrix equation for conversion into an estimated population in a target output unit.
Fig 25 is a drawing showing a configuration of a terminal-entry-count estimation device in the eighth embodiment.
Fig. 26 is a drawing for explaining an example of an unidentifiability securing process.
Fig 27 is a drawing showing a configuration of a terminal-entry-count estimation device in the ninth embodiment.
Fig. 28 is a flowchart showing an example of a concealment process.
Fig. 29 is a drawing showing a person-entry-count distribution, a change of person-entry-count, a change of cumulative person-entry-count, and the number of entering persons distribution as examples of output forms.
Fig. 30 is a drawing for explaining observation periods necessary for calculation of the number of entering terminals or the number of leaving terminals.

**Description of Embodiments**

Embodiments of the present invention will be described below with reference to the accompanying drawings. The same portions will be denoted by the same reference signs as much as possible, without redundant description.

[First embodiment]

[Configuration of communication system]

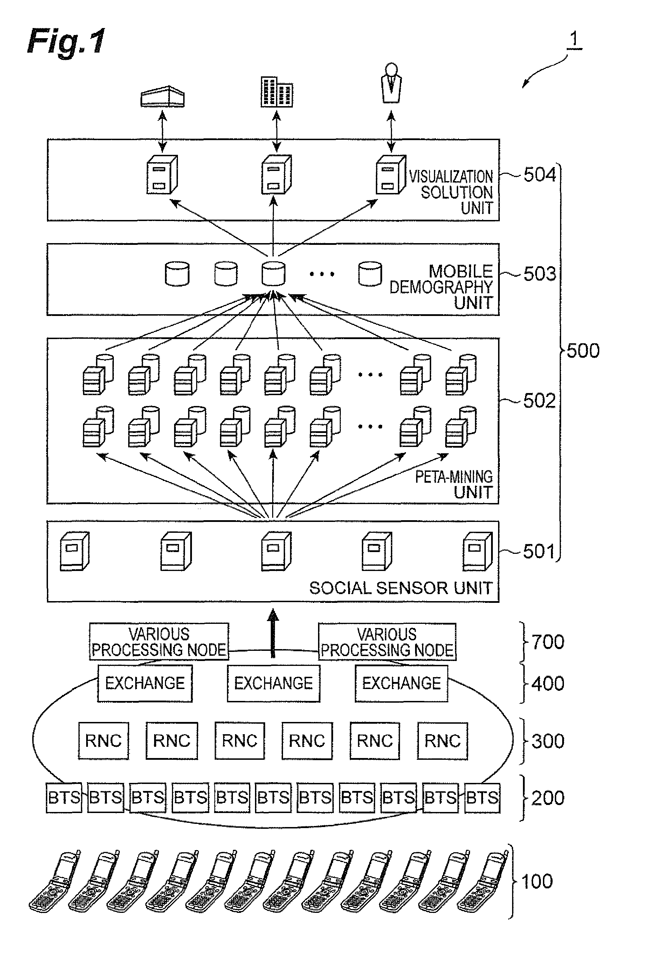

Fig. 1 is a system configuration diagram of a communication system 1 of the present embodiment. As shown in Fig. 1, this communication system 1 is configured including mobile terminals 100, BTSs (base transceiver stations) 200, RNCs (radio network controllers) 300, exchanges 400, various processing nodes 700, and a management center 500. This management center 500 is composed of a social sensor unit 501, a peta-mining unit 502, a mobile demography unit 503, and a visualization solution unit 504.
The exchanges 400 collect below-described location information on the mobile terminals 100 through the BTSs 200 and RNCs 300. The RNCs 300 are able to measure locations of the mobile terminals 100 by using delay values in RRC connection request signals, during execution of communication connections with the mobile terminals 100. The exchanges 400 are able to receive the location information of the mobile terminals 100 measured as described above, during execution of communication connections by the mobile terminals 100. The exchanges 400 store the received location information and output the collected location information to the management center 500 at predetermining timing or in response to a request from the management center 500.

The various processing nodes 700 acquire the location information of the mobile terminals 100 through the RNCs 300 and exchanges 400, perform re-calculation of location or the like if necessary, and output the collected location information to the management center 500 at predetermining timing or in response to a request from the management center 500.

The location information of mobile terminals 100 in the present embodiment can be sector-numbers indicative of sectors acquired from location registration signals, location positioning data obtained by a location information acquisition system such as the GPS positioning system or PRACH PD, and so on. The location data of a mobile terminal 100 includes identification information to identify the mobile terminal (e.g., information associated with the mobile terminal, such as a line number), and location acquisition time information when the location information is acquired, in addition to the aforementioned location information. When the line number is used as the identification information, it is preferable to use a value associated with the line number (e.g., a hash of the line number or the like) instead of using the line number (i.e., it is preferable to make the line number unidentifiable). When the system is configured to perform the process for each attribute of the user by using the value associated with the line number (e.g., the hash of the line number or the like) as described above, it is also necessary to use for user-identifiable information in the attribute information, a value associated with the user-identifiable information (i.e., it is necessary to make the user-identifiable information unidentifiable). Such an unidentifiability securing process will be described in detail in the eighth embodiment.

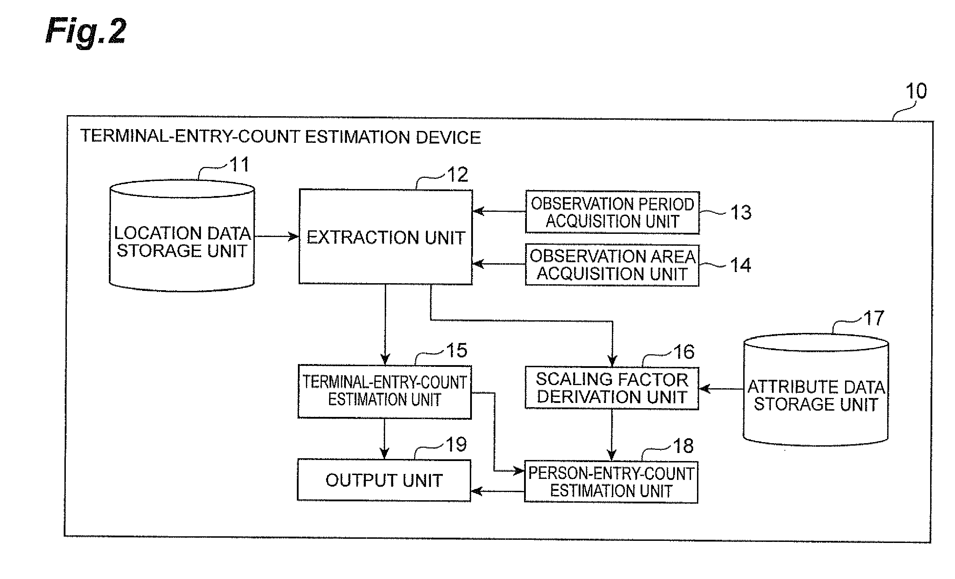

The management center 500, as described above, is configured including the social sensor unit 501, peta-mining unit 502, mobile demography unit 503, and visualization solution unit 504, and each unit performs statistical processing using the location data of mobile terminals 100. A below-described terminal-entry-count estimation device 10 (Fig. 2) can be composed, for example, of the management center 500.

The social sensor unit 501 consists of server apparatus to collect data including the location information of mobile terminals 100 and others, from each exchange 400 and various processing node 700, or, off-line. This social sensor unit 501 is configured so as to be able to receive data output at periodic intervals from the exchanges 400 and various processing nodes 700 or to acquire data from the exchanges 400 and various processing nodes 700 in accordance with timing predetermined in the social sensor unit 501.

The peta-mining unit 502 consists of server apparatus to convert data received from the social sensor unit 501, into a predetermined data format. For example, the peta-mining unit 502 performs a sorting process using user IDs as key or a sorting process on an area basis.

The mobile demography unit 503 consists of server apparatus to perform a totalization process on the data processed in the peta-mining unit 502, i.e., a counting process of each item. For example, the mobile demography unit 503 is able to count the number of users located in a certain area and to totalize distributions of presence count.

The visualization solution unit 504 consists of server apparatus to visualize the data totalized in the mobile demography unit 503. For example, the visualization solution unit 504 is able to perform a mapping process of mapping the totalized data on a map. The data processed by this visualization solution unit 504 is provided to companies, public agencies, individuals, or the like to be used in development of shops, surveys of road traffic, countermeasures against natural disasters, countermeasures against environmental damage, and so on. Such statistically processed information is processed so that individuals or the like cannot be identified therefrom, in order to prevent invasions of primacy, as a matter of course.

Each of the social sensor unit 501, peta-mining unit 502, mobile demography unit 503, and visualization solution unit 504 is composed of the server apparatus as described above, and it is needless to mention that each unit has an ordinary basic configuration of information processing device (i.e., CPU, RAM, ROM, input devices such as keyboard and mouse, a communication device for communication with the outside, a memory device to store information, and output devices such as display and printer), illustration of which is omitted herein.

[Configuration of terminal-entry-count estimation device]

Next, the terminal-entry-count estimation device according to the present embodiment will be described. Fig. 2 shows a function block configuration of the terminal-entry-count estimation device 10. As shown in this Fig. 2, the terminal-entry-count estimation device 10 is provided with a location data storage unit 11, an extraction unit 12, an observation period acquisition unit 13, an observation area acquisition unit 14, a terminal-entry-count estimation unit 15, a scaling factor derivation unit 16, an attribute data storage unit 17, a person-entry-count estimation unit 18, and an output unit 19.

The functions of the respective units in the terminal-entry-count estimation device 10 in Fig. 2 will be described below. The location data storage unit 11 acquires the location data from the outside (e.g., from the exchanges 400 and various processing nodes 700 and others) and stores the location data. It is not indispensable to set up the location data storage unit 11 in the terminal-entry-count estimation device 10, and the location data acquired by a device located outside the terminal-entry-count estimation device 10 may be fed, for example, through a memory medium into the terminal-entry-count estimation device 10.

The extraction unit 12 extracts a piece of location data of which location information indicates a location in an observation area and of which an acquisition time is within an observation period, for each terminal, from the location data stored in the location data storage unit 11. Alternatively, the extraction unit 12 extracts each of terminals corresponding to the location data of which the location information indicates a location in the observation area and of which the acquisition time is within the observation period. A specific extraction method thereof will be described later. By the below-described extraction method, the extraction unit 12 substantializes the function to extract a terminal estimated to be located in the observation area during at least a part of the observation period or to extract a piece of location data generated in the observation period or in a below-described extended period by the terminal.

The observation period acquisition unit 13 acquires observation period information including a set of an observation start time and an observation end time. The observation area acquisition unit 14 acquires observation area information associated with one or more pieces of location information. The observation area information herein is provided, for example, as a sector-number, a latitude and a longitude, a geographical range (e.g., municipal area unit), or the like and the observation area acquisition unit 14 is preferably provided with a database to manage correspondence information between an expression form of the acquired observation area information and an expression form of the location information (e.g., correspondence relation information between sector-numbers and latitudes & longitudes, or the like).

The terminal-entry-count estimation unit 15 counts the number of pieces of location data or the number of terminals extracted by the extraction unit 12, and estimates the count result to be a terminal-entry-count in the observation area during the observation period.

The attribute data storage unit 17 acquires attribute information of users of terminals at periodic intervals or at predetermined timing from the outside and stores the attribute information of users of terminals. The scaling factor derivation unit 16 derives a scaling factor for converting a terminal-entry-count into a person-entry-count, according to attributes of terminal users that can be acquired from the attribute data storage unit 17, and times (e.g., leading times of below-described overlap durations, acquisition times of location data, or the like). The scaling factor is desirably derived according to both of the attributes of terminal users and the times, but may be derived according to one of the attributes of terminal users and the times.

The person-entry-count estimation unit 18 totalizes the scaling factors on respective pieces of location data of the respective terminals, which were derived by the scaling factor derivation unit 16, and estimates the resultant sum of the scaling factors to be a person-entry-count in the observation area during the observation period. The output unit 19 outputs the terminal-entry-count or the person-entry-count obtained by the estimation. The output herein includes a variety of output modes such as display output, voice output, and print output. In the terminal-entry-count estimation device 10, the extraction unit 12 and the terminal-entry-count estimation unit 15 are indispensable constituent elements, but it is not indispensable to set up the other constituent elements in the terminal-entry-count estimation device 10.

[Terminal-entry-count estimation process]

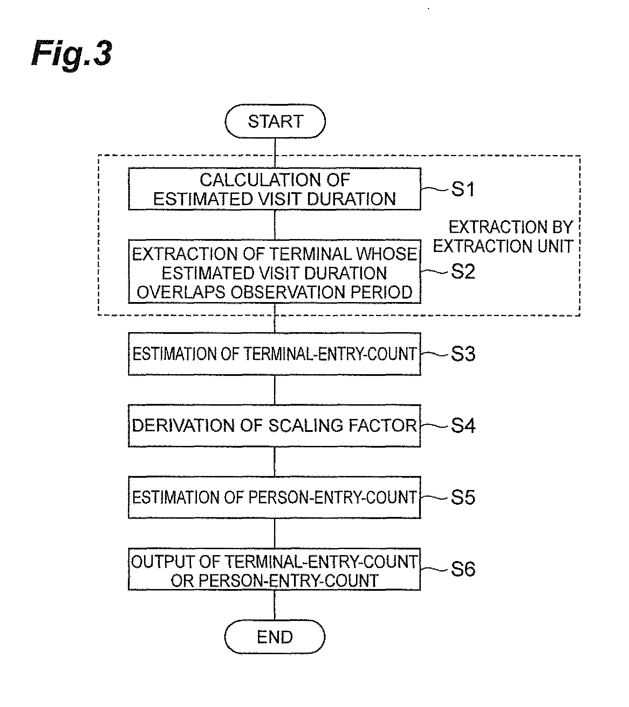

The below will describe a terminal-entry-count estimation process according to a terminal-entry-count estimation method of the present invention, using Fig. 3. It is assumed herein as an example that the location information in the location data of each mobile terminal given herein includes a sector-number of a sector in which the mobile terminal is located. It is also assumed herein that a set of an observation start time $t_0$ and an observation end time $t_1$ are preliminarily acquired as observation period information by the observation period acquisition unit 13 and that a sector-number S is preliminarily acquired as observation area information by the observation area acquisition unit 14. It is further assumed that the location data storage unit 11 preliminarily acquires the location data from the outside and stores the location data, and that the attribute data storage unit 17 preliminarily acquires the attribute information of users of terminals from the outside and stores the attribute information of users of terminals.

First, the extraction unit 12 extracts a piece of location data of which the location information indicates a location in the observation area and of which the acquisition time is within the observation period, for each terminal, from the location data stored in the location data storage unit 11, or extracts terminals corresponding to the location data of which the location information indicates a location in the observation area and of which the acquisition time is within the observation period. The extraction method herein can be adopted from a variety of methods. By the below-described extraction method, the extraction unit 12 substantializes the function to extract each terminal estimated to be located in the observation area during at least a part of the observation period, or to extract a piece of location data generated in the observation period or in the below-described extended period by the terminal. The below will describe a method using an estimated visit duration of each terminal in the observation area, as an example.

The extraction unit 12 calculates an estimated visit duration in which a terminal has been located in the observation area, terminal by terminal, based on in-area location data of which the acquisition time is within the below-described extended period and of which the location information indicates a location in the observation area and out-of-area location data which is adjacent to the in-area location data in a chronological arrangement in an order of acquisition times and of which the location information indicates a location out of the observation area, among the location data about the same terminal (step S1 in Fig. 3). The foregoing "extended period" herein means, as an example, a period obtained by extending the observation period by a predetermined time width (e.g., one hour) before and after the observation period, i.e., a period a start point of which is a time set backward by the predetermined time from the observation start time $t_0$ and an end point of which is a time set forward by the predetermined time from the observation end time $t_1$.

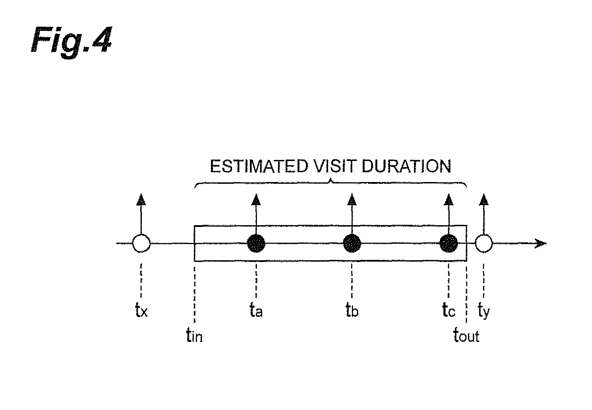

As shown in Fig. 4, let us arrange a sequence of pieces of location data about the same terminal acquired within the extended period, in a chronological order of acquisition times thereof, and let black dots indicate the in-area location data of which the location information indicates a location within the observation area, and white dots indicate the out-of-area location data which is adjacent to the in-area location data and of which the location information indicates a location out of the observation area; in this case, the start time of the estimated visit duration is defined as a time $t_{in}$ corresponding to a proportional division point (e.g., a midpoint) between the acquisition time $t_a$ of the leading piece of in-area location data in the chronological sequence and the acquisition time $t_x$ of a piece of out-of-area location data adjacent to the leading piece of in-area location data. Similarly, the end point of the estimated visit duration is defined as a time $t_{out}$ corresponding to a proportional division point (e.g., a midpoint) between the acquisition time $t_c$ of the last piece of in-area location data in the chronological sequence and the acquisition time ty of a piece of out-of-area location data adjacent to the last piece of in-area location data. According to this definition, the duration indicated by a rectangle in Fig. 4, i.e., the duration from the time $t_{in}$ to the time $t_{out}$ is calculated as the estimated visit duration of the terminal.

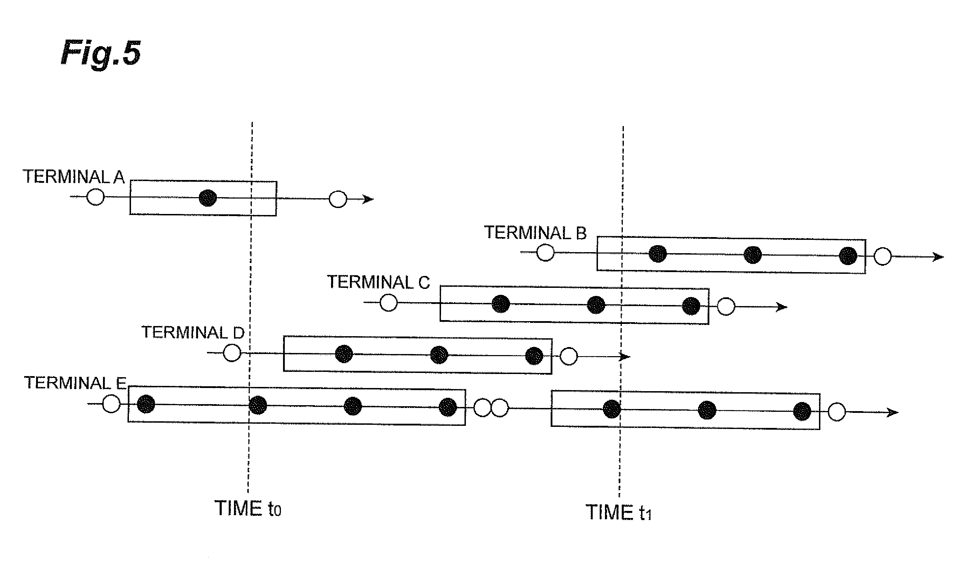

Then the extraction unit 12 extracts each terminal of which the calculated estimated visit duration overlaps the observation period (step S2 in Fig. 3). Fig. 5 shows a diagram in which sequences of location data about terminals A-E acquired within the extended period are arranged in a chronological order of acquisition times thereof along the horizontal-axis direction, terminal by terminal, and in this Fig. 5, black dots indicate the in-area location data of which the location information indicates a location in the observation area and white dots indicate the out-of-area location data the location formation of which indicates a location out of the observation area. If we note only the in-area location data of which the acquisition time is within the observation period (from time to to time $t_1$), three terminals C to E are extracted as terminals corresponding to the in-area location data.

However, there are five terminals A to E as terminals whose estimated visit durations indicated by the rectangles in Fig. 5 overlap the observation period (from time $t_0$ to time $t_1$), and therefore step S2 results in extracting the five terminals A to E. By this process, the terminals A, B, which are excluded with focus on only the in-area location data indicated by black dots, are also estimated to be located in the observation area somewhere in the observation period. The method using the estimated visit duration in steps S1, S2 described above is just an example, and other methods may be adopted. The other methods will be described later.

Next, the terminal-entry-count estimation unit 15 counts the number of terminals extracted in steps S1, S2, and estimates the count result to be a terminal-entry-count in the observation area during the observation period (step S3 in Fig. 3).

Next, the scaling factor derivation unit 16 derives a scaling factor for converting a terminal-entry-count into a person-entry-count, as to each of the extracted terminals (step S4 in Fig. 3). The scaling factor to be used herein can be, for example, a "terminal subscription rate" which is a ratio of "the number of subscriber terminals of a specific telecommunications carrier from which the location data is acquired" to "a population in an area of a predetermined range". The scaling factor is preferably derived according to an attribute of a terminal user (e.g., a gender, age group, or the like) and a time, which improves the accuracy of person-entry-count estimation. For example, the scaling factor derivation unit 16 may operate as follows: while terminal subscription rates are preliminarily acquired in respective attributes of terminal users, the scaling factor derivation unit 16 acquires the attribute information of a terminal user from the attribute data storage unit 17 and derives the terminal subscription rate corresponding to the attribute information of the terminal user, as the scaling factor. When the scaling factor such as the terminal subscription rate varies depending on time, the scaling factor derivation unit 16 preferably extracts a leading time of a duration in which the estimated visit duration overlaps the observation period, and derives the scaling factor corresponding to the leading time obtained.

Next, the person-entry-count estimation unit 18 totalizes the scaling factors on respective pieces of location data for the respective terminals, which were derived by the scaling factor derivation unit 16, and estimates the resultant sum of the scaling factors to be a person-entry-count in the observation area during the observation period (step S5 in Fig. 3).

Then the output unit 19 outputs the person-entry-count obtained by the estimation (step S6 in Fig. 3). At the same time, the output unit 19 may also output the terminal-entry-count obtained in step S3. The output herein includes a variety of output modes such as the display output, voice output, and print output.

The first embodiment as described above involves extracting the terminals of which the estimated visit duration in the observation area overlaps the observation period, whereby it is able to accurately extract the terminals estimated to be located in the observation area somewhere in the observation period and thus to accurately estimate the terminal-entry-count in the observation area during the observation period from the count of the terminals. Since the present embodiment is configured to totalize the scaling factors acquired according to the attributes of terminal users and the extracted times, it is able to accurately estimate the person-entry-count in the observation area during the observation period.

It is noted that the aforementioned method using the estimated visit duration in steps S1, S2 in Fig. 3 is just an example and the other methods may be adopted. As another example, the extraction unit 12 may extract a piece of location data, e.g., location data with the earliest acquisition time, out of the in-area location data of which the acquisition time is within the observation period, among the location data about the same terminal. When a piece of location data is extracted terminal by terminal in this manner, the accuracy of extraction is slightly lower than in the aforementioned method using the estimated visit duration for each terminal, but a piece of location data can be extracted terminal by terminal with a lower processing load because there is no need for calculation of the estimated visit duration for each terminal. In this case, step S3 in Fig. 3 can be arranged to estimate the terminal-entry-count by counting the number of extracted pieces of location data. Furthermore, step S4 in Fig. 3 can be arranged to derive the scaling factors according to the acquisition times of the extracted pieces of location data and the attribute information of users of terminals corresponding to the location data. When a piece of location data is extracted for each terminal, it is not essential to extract the location data with the earliest acquisition time, but another piece of location data may be extracted. For example, the step may be arranged to extract the location data with the last acquisition time or the location data of which the acquisition time is the closest to an exact center point of the observation period.

The above embodiment showed the example wherein the terminal-entry-count estimation device 10 of Fig. 2 was provided with the scaling factor derivation unit 16, the attribute data storage unit 17, and the person-entry-count estimation unit 18, but it should be noted that the scaling factor derivation unit 16, the attribute data storage unit 17, and the person-entry-count estimation unit 18 are not indispensable constituent elements but may be omitted. In this case, steps S4 and S5 are omitted from the processing in Fig. 3 and step S6 is arranged so that the output unit 19 outputs the terminal-entry-count estimated by the terminal-entry-count estimation unit 15.

[Second embodiment]

The second embodiment will describe an example of calculating an average visit duration about a terminal user located in the observation area during the observation period (period from the observation start time to to the observation end time $t_1$).

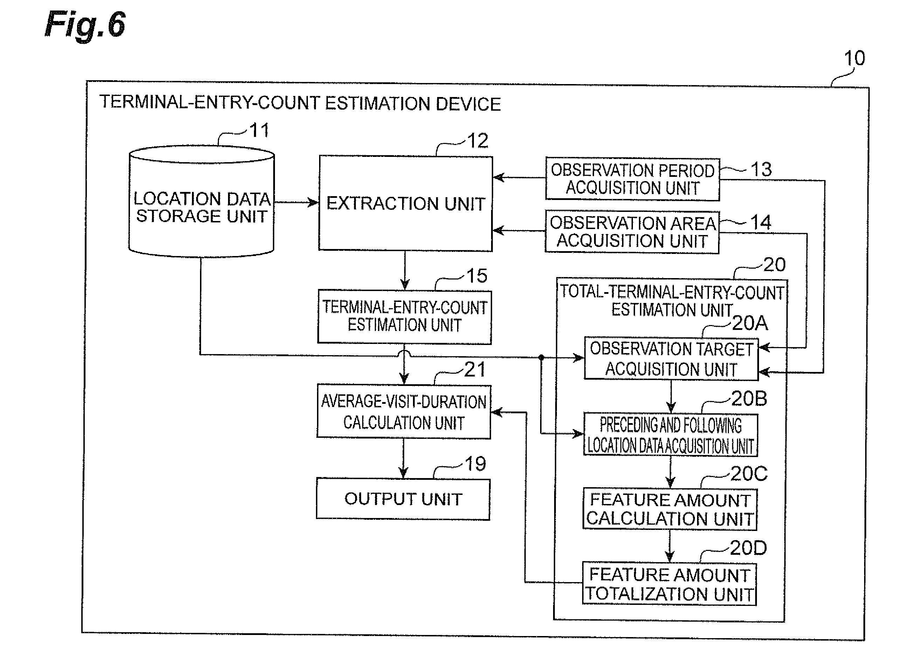

Fig. 6 shows a configuration of the terminal-entry-count estimation device 10 in the second embodiment, in which the same constituent elements as in the terminal-entry-count estimation device (Fig. 2) in the first embodiment are denoted by the same reference signs. As shown in Fig. 6, the terminal-entry-count estimation device 10 in the second embodiment is configured so that the scaling factor derivation unit 16, the attribute data storage unit 17, and the person-entry-count estimation unit 18 are excluded from the terminal-entry-count estimation device (Fig. 2) in the first embodiment and, instead thereof, a total-terminal-entry-count estimation unit 20 and an average-visit-duration calculation unit 21 are added. The below will describe the added total-terminal-entry-count estimation unit 20 and average-visit-duration calculation unit 21.

The total-terminal-entry-count estimation unit 20 estimates a total-terminal-entry-count in the observation area during the observation period, based on the location data of which the acquisition time is within the aforementioned extended period.

The average-visit-duration calculation unit 21 performs a calculation to divide the total-terminal-entry-count obtained in the estimation by the total-terminal-entry-count estimation unit 20, by the terminal-entry-count obtained in the estimation by the terminal-entry-count estimation unit 15, and define the result as an average visit duration in the observation area during the observation period. The average-visit-duration calculation unit 21 herein corresponds to the "first-average-visit-duration calculation unit" in the scope of claims.

As shown in Fig. 6, the aforementioned total-terminal-entry-count estimation unit 20 is provided with an observation target acquisition unit 20A, a preceding and following location data acquisition unit 20B, a feature amount calculation unit 20C, and a feature amount totalization unit 20D.

The observation target acquisition unit 20A acquires observation start time information and observation end time information about the observation period to be observed, from the observation period acquisition unit 13, acquires observation area information about the observation area to be observed, from the observation area acquisition unit 14, and acquires as observation target location data, one or more pieces of location data including location acquisition time information after the observation start time and before the observation end time and location information associated with the observation area information, from the location data storage unit 11. The observation target location data may be further subjected to a narrowing process by a separately given condition (e.g., age groups of users of mobile terminals or the like).

The preceding and following location data acquisition unit 20B acquires, concerning a piece of location data as a target on which a below-described feature amount is calculated in a procedure of total-terminal-entry-count estimation processing (which will be referred to hereinafter as "first location data"), the location acquisition time information of location data immediately preceding the first location data (which will be referred to hereinafter as "second location data") and the location acquisition time information of location data immediately following the first location data (which will be referred to hereinafter as "third location data"), from the location data including the same identification information as that of the first location data. It is not essential for the preceding and following location data acquisition unit 20B to acquire the whole of the second or third location data, but it is sufficient for the preceding and following location data acquisition unit 20B to acquire, at least, the location acquisition time information in the location data. The acquisition of the location acquisition time information of the second and third location data by the preceding and following location data acquisition unit 20B can be implemented by making use of the conception of the extended period described in the first embodiment (i.e., the period extended by the predetermined time width (e.g., one hour) before and after the observation period). For example, the preceding and following location data acquisition unit 20B may preliminarily acquire the location data the location acquisition time of which is within the extended period, from the location data storage unit 11 and acquire the foregoing location acquisition time information of the second and third location data from the preliminarily-acquired location data.

The feature amount calculation unit 20C calculates the feature amount on each piece of first location data. For example, the feature amount calculation unit 20C calculates a difference between the location acquisition time of the second location data and the location acquisition time of the third location data, as the "feature amount" on the first location data. When the location acquisition time of the second location data is an abnormal value, e.g., when a difference between the location acquisition time of the first location data and the location acquisition time of the second location data is larger than a predetermined reference value (e.g., one hour) as an example, the feature amount calculation unit 20C uses as the location acquisition time of the second location data, a time set backward by a predetermined time (e.g., one hour) from the location acquisition time of the first location data to calculate the feature amount on the first location data. Similarly, when the location acquisition time of the third location data is an abnormal value, e.g., when a difference between the location acquisition time of the first location data and the location acquisition time of the third location data is larger than a predetermined reference value (e.g., one hour) as an example, the feature amount calculation unit 20C uses as the location acquisition time of the third location data, a time set forward by a predetermined time (e.g., one hour) from the location acquisition time of the first location data to calculate the feature amount on the first location data. These processes in the case where the location acquisition time of the second or third location data is an abnormal value are not indispensable processes, but execution of the above processes can prevent such inconvenience that when an acquisition time interval of location data becomes abnormally long because of the mobile terminal 100 being located in an out-of-service area or because of the mobile terminal 100 being in a power-off mode, the abnormally long acquisition time interval excessively affects the calculation result.

The feature amount totalization unit 20D totalizes the feature amounts on the observation target location data and estimates the total-terminal-entry-count to be a value obtained by dividing the resultant sum of the feature amounts by 2. The reason why the value obtained by dividing the sum of feature amounts by 2 can be estimated as the total-terminal-entry-count in this manner, is that a half of the time duration between preceding and following signals is considered to be the estimated visit duration.

[Terminal-entry-count estimation process]

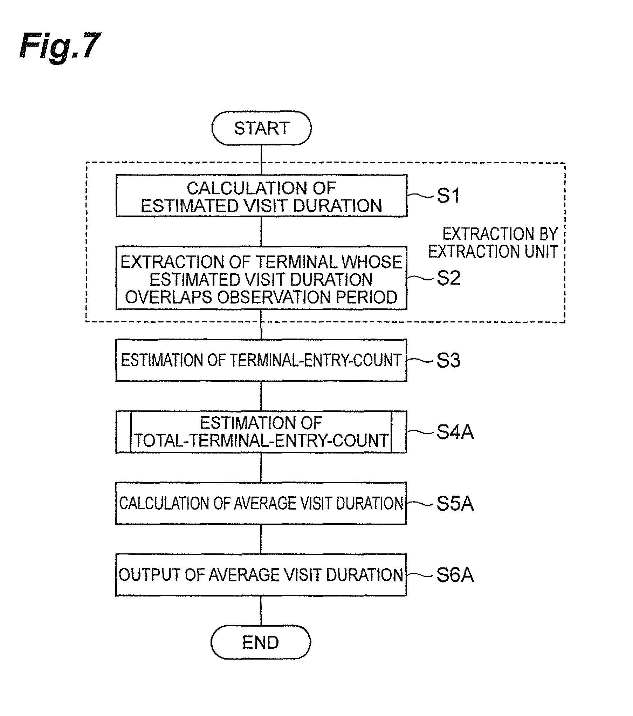

The terminal-entry-count estimation process in the second embodiment will be described below along Fig. 7. Since steps S1 to S3 are common to the terminal-entry-count estimation process (Fig. 3) in the first embodiment described above, the description of these steps is omitted herein and steps S4A to S6A will be described below.

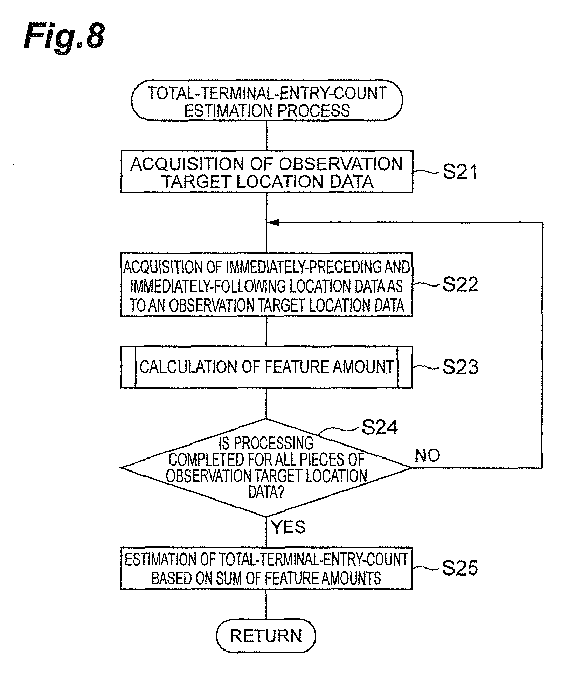

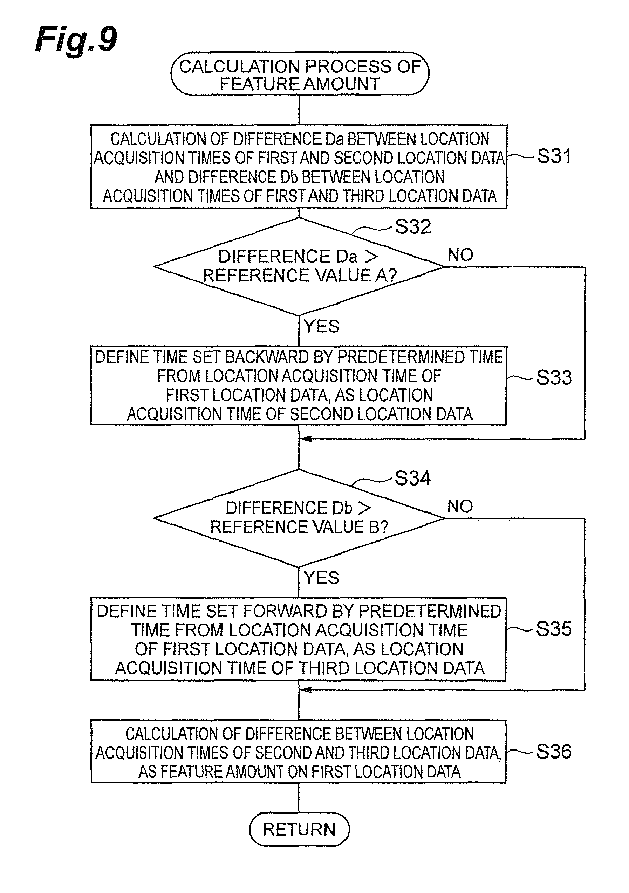

In step S4A in Fig. 7, the total-terminal-entry-count estimation unit 20 executes an estimation process of the total-terminal-entry-count shown in Fig. 8. An example of the process will be described later using Fig. 8 and Fig. 9. As a modification example, the process in step S4A may be executed prior to the process in step S3 or may be concurrently executed in parallel with the process in step S3.

Next, in step S5A, the average-visit-duration calculation unit 21 performs the calculation to divide the total-terminal-entry-count obtained in the estimation by the total-terminal-entry-count estimation unit 20, by the terminal-entry-count obtained in the estimation by the terminal-entry-count estimation unit 15, and defines the result as an average visit duration in the observation area during the observation period.

In step S6A, the output unit 19 then outputs the calculated average visit duration. At the same time, the output unit 19 may also output the terminal-entry-count obtained in step S3 and the total-terminal-entry-count obtained in step S4A. The output herein includes a variety of output forms such as the display output, voice output, and print output.

The terminal-entry-count estimation process in the second embodiment as described above is arranged to divide the total-terminal-entry-count obtained by the method which will be described below as an example, by the terminal-entry-count obtained by the same method as in the first embodiment, and thereby to obtain the result as an average visit duration in the observation area during the observation period.

[Example of total-terminal-entry-count estimation process]

The below will describe an example of step S4A in Fig. 7 (total-terminal-entry-count estimation process), using Fig. 8 and Fig. 9. It should be noted, however, that the total-terminal-entry-count estimation process is not limited only to the content of the process described below.

As shown in Fig. 8, the observation target acquisition unit 20A in Fig. 6 first acquires the set of the observation start time to and the observation end time $t_1$ as observation period information from the observation period acquisition unit 13 and the sector-number S as observation area information from the observation area acquisition unit 14 and thereafter acquires as the observation target location data, one or more pieces of location data including the location acquisition time information after the observation start time $t_0$ and before the observation end time $t_1$ and including the location information associated with the sector-number S as the observation area information (e.g., location data of which the location information is the sector-number S), from the location data storage unit 11 (step S21 in Fig. 8). Namely, the observation target acquisition unit 20A acquires the location data meeting the following conditions, as the observation target location data.

Condition 1: the location acquisition time is after the observation start time $t_0$ and before the observation end time $t_1$. Namely, the location acquisition time is within the observation period.

Condition 2: the location information is the sector S.

Next, the processes in steps S22 and S23 below are executed for each piece of the acquired observation target location data. In step S22, concerning a piece of location data (first location data) as a target for calculation of the feature amount out of the observation target location data, the preceding and following location data acquisition unit 20B acquires the location acquisition time information of the location data (second location data) immediately preceding the first location data and the location acquisition time information of the location data (third location data) immediately following the first location data, in view of their location acquisition times, from the location data including the same identification information as that of the first location data. At this time, the preceding and following location data acquisition unit 20B may preliminarily acquire the location data of which the location acquisition time is within the extended period (i.e., the extended period extended by the predetermined width (e.g., one hour) before and after the observation period), from the location data storage unit 11 and acquire the foregoing location acquisition time information of the second and third location data from the preliminarily-acquired location data. It is noted herein that it is not essential for the preceding and following location data acquisition unit 20B to acquire the whole of the second and third location data, but it is sufficient for the preceding and following location data acquisition unit 20B to acquire the location acquisition time information in the second and third location data.

Then, in step S23 the feature amount calculation unit 20C calculates the feature amount on the first location data. The content of the process will be described using Fig. 9. It is assumed herein that the location acquisition times of the first, second, and third location data are tm1, tm2, and tm3, respectively. It is also assumed that a reference value A (e.g., one hour) is defined as a predetermined reference value of a reference to determine that the location acquisition time tm2 of the second location data is an abnormal value (a reference value about a difference between the location acquisition times of the first and second location data) and that a reference value B (e.g., one hour) is defined as a predetermined reference value of a reference to determine that the location acquisition time tm3 of the third location data is an abnormal value (a reference value about a difference between the location acquisition times of the first and third location data).

The feature amount calculation unit 20C calculates the difference between the location acquisition times of the first and second location data (i.e., the difference between the times tm1 and tm2) Da, and the difference between the location acquisition times of the first and third location data (i.e., the difference between the times tm1 and tm3) Db (step S31 in Fig. 9). Then the feature amount calculation unit 20C determines whether the difference Da between the location acquisition times of the first and second location data is larger than the predetermined reference value A (e.g., one hour) (step S32); if the difference Da is larger than the reference value A, the feature amount calculation unit 20C defines a time set backward by a predetermined time (e.g., one hour) from the location acquisition time tm1 of the first location data, as the location acquisition time tm2 of the second location data (step S33). Next, the feature amount calculation unit 20C determines whether the difference Db between the location acquisition times of the first and third location data is larger than the predetermined reference value B (e.g., one hour) (step S34); if the difference Db is larger than the reference value B, the feature amount calculation unit 20C defines a time set forward by a predetermined time (e.g., one hour) from the location acquisition time tm1 of the first location data, as the location acquisition time tm3 of the third location data (step S35). Then the feature amount calculation unit 20C calculates a difference between the location acquisition time tm2 of the second location data and the location acquisition time tm3 of the third location data, as a feature amount on the first location data (step S36).

The above completes the processes in steps S22 and S23 in Fig. 8 for a given piece of observation target location data (first location data).

Thereafter, the aforementioned processes in steps S22 and S23 are executed for each piece of the observation target location data, and the flow goes to step S25 after the execution of the processes is completed for all pieces of the observation target location data (with an affirmative judgment in step S24).

In step S25, the feature amount totalization unit 20D sums up the feature amounts $w_{ij}$ on the observation target location data and estimates the total-terminal-entry-count to be a numeral obtained by dividing the resultant sum of the feature amounts by 2. The total-terminal-entry-count can be estimated in this manner. The reason why the total-terminal-entry-count can be estimated to be the numeral obtained by dividing the sum of feature amounts by 2 is that an estimated visit duration is considered to be a half of a duration of time between preceding and following signals.

Since the foregoing estimation process involves performing the correction using the acquisition time information of the preceding and following location data in estimating the total-terminal-entry-count using the location data, the total-terminal-entry-count can be accurately estimated while correcting the influence of variation in reception intervals. Since the processes in the case where the location acquisition time of the second or third location data is the abnormal value as described above are carried out in the calculation process of feature amount, when the acquisition time interval of location data becomes abnormally long because of the mobile terminal 100 being located in an out-of-service area or because of the mobile terminal 100 being in a power-off mode, it becomes feasible to prevent the abnormally long acquisition time interval from excessively affecting the calculation result.

[Conception of total-terminal-entry-count estimation]

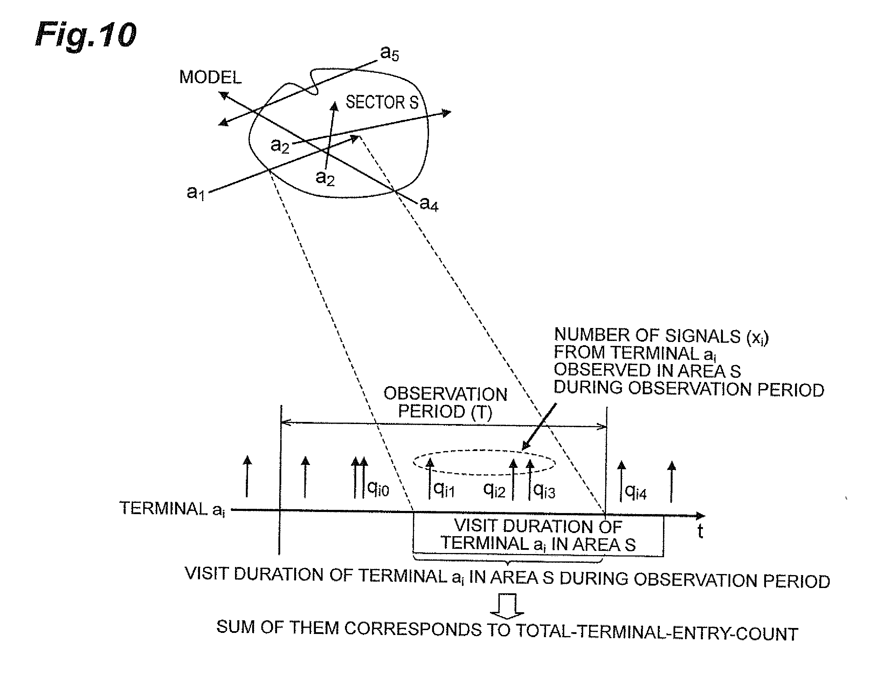

Next, the conception of total-terminal-entry-count estimation will be described. Let us assume, like the model shown in Fig. 10, that n terminals $a_1$, $a_2$, ..., $a_n$ pass a sector S during a certain observation period (length T) and a visit duration of each terminal $a_i$ in the sector S during the observation period is $L_i$ ($0 < L_i \leq T$). In this case, a terminal-entry-count m of terminals located in the sector S (in fact, an average in the observation period of the terminal-entry-count m of terminals located in the sector S) is represented by Equation (1) below.

$$m = \sum_{i=1}^{n} L_i \diagup T \qquad (1)$$

Namely, the terminal-entry-count m is estimated to be the result of a division of the sum of visit durations $L_i$ of respective terminals $a_i$ in the sector S during the observation period by the length T of the observation period. However, true values of the visit durations $L_i$ of the respective terminals $a_i$ in the sector S during the observation period are unobservable, but each terminal $a_i$ sends signals (e.g., location registration signals), which are observable.

Let us assume that signals sent in the sector S during the observation period by terminal $a_i$, are defined in chronological order as follows.

$$q_{i1}, \quad q_{i2}, \ldots, \quad q_{ix_i}$$

(where $x_i$ is a total number of signals sent in the sector S during the observation period by terminal $a_i$). Then the estimation of the terminal-entry-count is nothing but estimating the value of m from the observed signals $q_{ij}$ (where j is an integer of not less than 1 and not more than $x_i$).

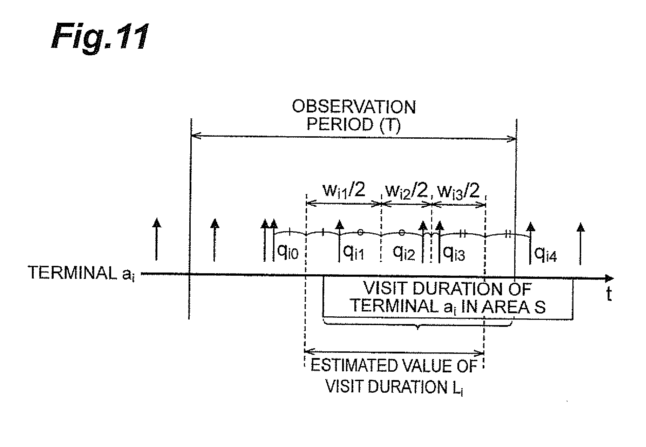

Now, let us explain the calculation method of total-terminal-entry-count estimation on the basis of Fig. 11. It is assumed that a density of signals $q_{ij}$ transmitted from terminal $a_i$ (i.e., the number of signals per unit time) is $p_i$. At this time, supposing that a probability of transmission of signal is independent of the sector, an expectation $E(x_i)$ of a total $x_i$ of signals sent in the sector S during the observation period by terminal $a_i$ is given by $E(x_i) = L_i \times p_i$ and therefore Equation (2) below holds as to an expectation $E(L_i)$ of the visit duration $t_i$ of terminal $a_i$ in the sector S during the observation period.

$$E(L_i) = x_i/p_i \qquad (2)$$

When a transmission time of each signal $q_{ij}$ is represented by $u_{ij}$, a density $p_{ij}$ of signal $q_{ij}$ is given by Equation (3) below.

$$p_{ij} = 2/(u_{i(j+1)} - u_{i(j-1)}) \qquad (3)$$

When the signal $q_{ij}$ is assumed to be a signal related to the first location data, the signal $q_{i(j-1)}$ corresponds to a signal related to the second location data and the signal $q_{i(j+1)}$ to a signal related to the third location data. In the present embodiment, a difference between the transmission time $u_{i(j-1)}$ of the signal $q_{i(j-1)}$ related to the second location data and the transmission time $u_{i(j-1)}$ of the signal $q_{i(j+1)}$ related to the third location data, i.e., $(u_{i(j+1)} - u_{i(j-1)})$ in above Equation (3) is defined as a feature amount $w_{ij}$ on the first location data (feature amount $w_{ij} = u_{i(j+1)} - u_{i(j-1)}$). Therefore, Equation (3) above can be written into the formula below. Namely, the feature amount $w_{ij}$ can be calculated in association with the reciprocal of the density $p_{ij}$.

$$p_{ij} = 2/(u_{i(j+1)} - u_{i(j-1)}) = 2/w_{ij} \qquad (4)$$

At this time, since the density $p_i$ is given by the following formula:

$$p_i = x_i \Big/ E\ (t_i)\ = \Big(x_i \Big/ \sum_{j=1}^{x_i} w_{ij}\Big) \times 2 \qquad (5),$$

an estimated value E(m) of the terminal-entry-count m can be calculated according to Equation (6) below.

$$E\ (m)\ =\ \Big(\sum_{i=1}^{n} \sum_{j=1}^{x_i} (w_{ij} \big/ 2)\Big)\ \big/ T = \Big(\sum_{i=1}^{n} \sum_{j=1}^{x_i} w_{ij}\Big)\ \big/ 2T \qquad (6)$$

A value obtained by multiplying the estimated value E(m) of the terminal-entry-count by the observation period length T (i.e., a value resulting from above Equation (6) without division by the observation period length T) is the sum of estimated visit durations of terminals and corresponds to the total-terminal-entry-count in the observation period. Namely, the total-terminal-entry-count in the observation period can be calculated by Equation (7) below.

$$\text{Total - terminal - entry - count}\ =\ \sum_{i=1}^{n} \sum_{j=1}^{x_i} (w_{ij} \big/ 2) \qquad (7)$$

When it is assumed as shown in the example of Fig. 11 that in the observation period and in the duration in which the terminal $a_i$ is located in the sector S, the terminal $a_i$ transmits signals $q_{i1}$, $q_{i2}$, and $q_{i3}$, that the terminal $a_i$ transmits a signal $q_{i0}$ immediately preceding the signal $q_{i1}$ and transmits a signal $q_{i4}$ immediately following the signal $q_{i3}$, and that the transmission times of the signals $q_{i0}$, $q_{i1}$, $q_{i2}$, $q_{i3}$, and $q_{i4}$ are $u_{i0}$, $u_{i1}$, $u_{i2}$, $u_{i3}$, and $u_{i4}$, respectively, the aforementioned conception is equivalent to estimating the visit duration $L_i$ of the terminal $a_i$ in the sector S during the observation period to be a duration from (a midpoint between $u_{i0}$ and $u_{i1}$) to (a midpoint between $u_{i3}$ and $u_{i4}$). The terminal $a_i$ transmits the signal $q_{i4}$ when the terminal is located in the sector S, though it is not transmitted during the observation period. However, an example described herein is a process without execution of the estimation on the assumption that the end time of

the visit duration $L_i$ is the same as the end time of the observation period T, in order to maintain unbiasedness of the estimated value of the visit duration $L_i$.

The total-terminal-entry-count estimation process to be adopted can also be the process as described below, besides the aforementioned process. Specifically, when it is assumed that the start time of the observation period is t0, the end time thereof is t1, the number of terminals in the observation area at d-hour intervals in the observation period t0-t1 have been estimated, and the number of terminals estimates are s0, s1, s2, ..., and sn, a value obtained by multiplying the sum of the number of terminals estimates by the time duration d, i.e., ((s0 + s1 + s2 +...+ sn) $\times$ d) may be estimated to be the total-terminal-entry-count in the observation area during the observation period t0-t1

The above second embodiment showed the example wherein the average-visit-duration calculation unit 21 calculated as the average visit duration the value obtained by dividing the total-terminal-entry-count by the terminal-entry-count, but as a modification example thereof, the average-visit-duration calculation unit 21 may calculate as the average visit duration, a value obtained by dividing a total population obtained by converting the total-terminal-entry-count into a population, by the person-entry-count obtained by the method in the first embodiment. The average-visit-duration calculation unit 21 may also be configured to calculate the total population in the observation area during the observation period by the same method as the aforementioned total-terminal-count calculation method, based on a demographic change in the observation area during the observation period, and calculate as the average visit duration, a value obtained by dividing the resultant total population by the person-entry-count obtained by the method in the first embodiment. The average-visit-duration calculation unit 21 herein corresponds to the "second-average-visit-duration calculation unit" in the scope of claims.

[Third embodiment]

The third embodiment will describe a process of obtaining the number of entering terminals and the number of leaving terminals from the terminal-entry-counts obtained in the estimation.

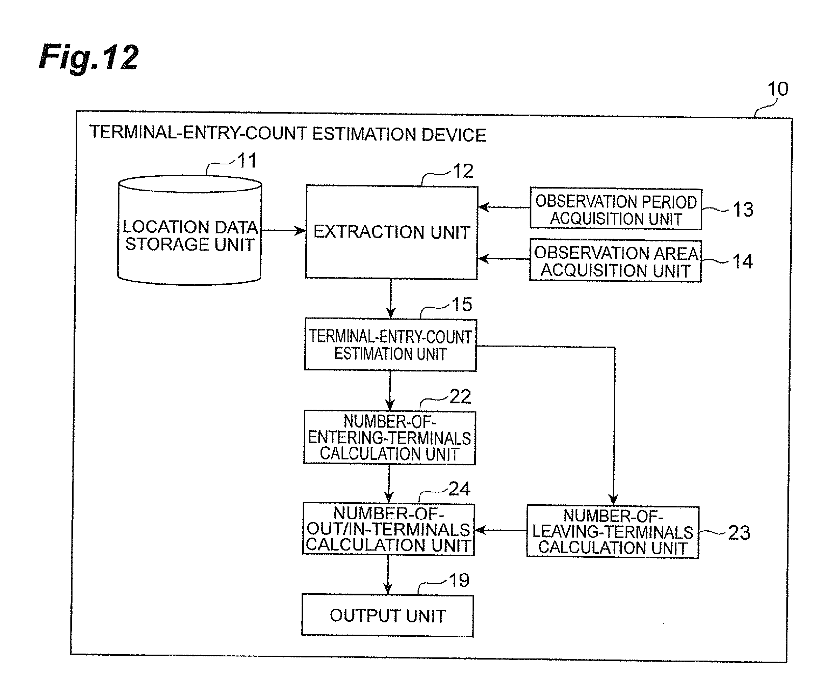

As shown in Fig. 12, the terminal-entry-count estimation device 10 in the third embodiment is provided with the location data storage unit 11, extraction unit 12, observation period acquisition unit 13, observation area acquisition unit 14, terminal-entry-count estimation unit 15, and output unit 19, in the same manner of the terminal-entry-count estimation device (Fig. 2) in the aforementioned first embodiment. Furthermore, the terminal-entry-count estimation device 10 is provided with a number-of-entering-terminals calculation unit 22 to calculate the number of entering terminals, a number-of-leaving-terminals calculation unit 23 to calculate the number of leaving terminals, and a number-of-out/in-terminals calculation unit 24 to calculate the number of out/in terminals.

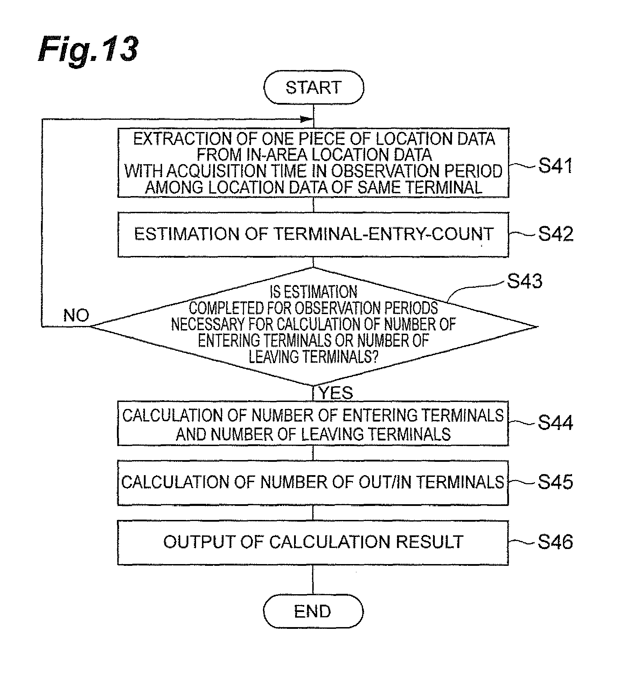

Next, the processing by the terminal-entry-count estimation device 10 in the third embodiment will be described using Fig. 13. It is assumed herein, as in the first embodiment, that the location information in the location data of each mobile terminal to be given is, for example, a sector-number of a sector in which the mobile terminal is located, a set of an observation start time and an observation end time are preliminarily acquired as the observation period information by the observation period acquisition unit 13, and a sector-number S is preliminarily acquired as the observation area information by the observation area acquisition unit 14. It is also assumed that the location data storage unit 11 preliminarily acquires the location data from the outside and stores the location data. The aforementioned observation period information is set to be information of observation periods necessary for the calculation of the number of entering terminals or the number of leaving terminals detailed below.

First, the extraction unit 12 extracts a mobile terminal estimated to be located in the observation area during at least a part of the observation period, or a piece of location data generated in the observation period or in the extended period by the mobile terminal, based on the location data of which the acquisition time is within the observation period or within the extended period (period extended by the predetermined width from the observation period) described in the first embodiment. An extraction method herein can be adopted from a variety of methods, and the below will describe a method different from the method in the first embodiment (the method using the estimated visit duration of each terminal in the observation area).

In step S41 shown in Fig. 13, the extraction unit 12 extracts a piece of location data (location data with the earliest acquisition time, as an example) out of the in-area location data of which the acquisition time is within the observation period, among the location data of the same terminal. When a piece of location data is extracted for each terminal in this manner, the accuracy of extraction is slightly lower than in the aforementioned method in the first embodiment (the method using the estimated visit duration of each terminal in the observation area), but a piece of location data can be extracted terminal by terminal with a lower processing load because there is no need for calculation of the estimated visit duration for each terminal. When a piece of location data is extracted for each terminal, it is not indispensable to extract the location data with the earliest acquisition time, but the process may be arranged to extract another piece of location data. For example, the process may be arranged to extract the location data with the last acquisition time or the location data of which the acquisition time is the closest to an exact center point of the observation period. In next step S42, the terminal-entry-count estimation unit 15 then estimates the terminal-entry-count by counting the number of extracted pieces of location data.

The above processes in steps S41, S42 are executed as to the observation periods necessary for the below-described calculation of the number of entering terminals or the number of leaving terminals.

After completion of the processes in steps S41, S42 as to the observation periods necessary for the calculation of the number of entering terminals or the number of leaving terminals, the flow proceeds to step S44 to perform the calculation of the number of entering terminals by the number-of-entering-terminals calculation unit 22 and the calculation of the number of leaving terminals by the number-of-leaving-terminals calculation unit 23 as described below.

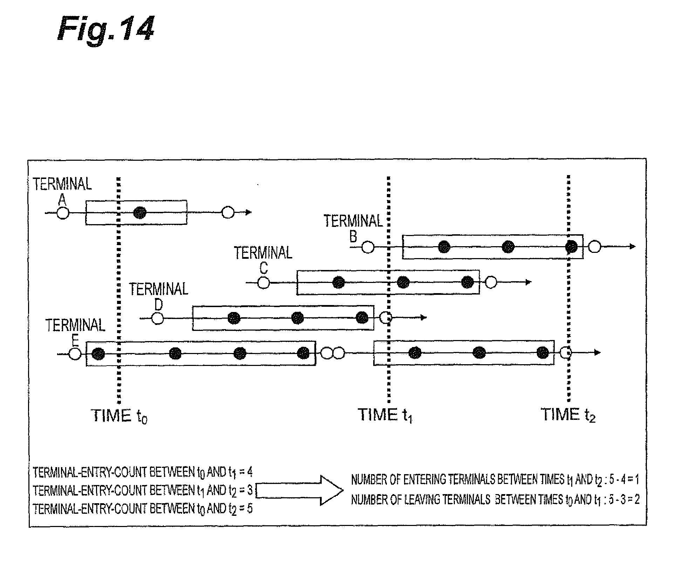

Let us suppose as an example, as shown in Fig. 14, that the terminal-entry-count estimation unit 15 has calculated the terminal-entry-count in an observation period Px from the start time t0 to the end time t1, the terminal-entry-count in an observation period Py from the start time t1 to the end time t2, and the terminal-entry-count in an observation period Pz from the start time t0 to the end time t2.

At this time, the number-of-entering-terminals calculation unit 22 calculates a difference between the numbers of entering terminals in the respective observation periods Px and Pz with the same start time, as the number of entering terminals into the observation area during a period between the end time of the observation period Px and the end time of the observation period Pz (the period between the times t1 and t2). For example, when the number of entering terminals in the observation period Px is "4" and the number of entering terminals in the observation period Pz is "5", the number-of-entering-terminals calculation unit 22 calculates the difference "1" between them, as the number of entering terminals into the observation area during the period between the end time of the observation period Px and the end time of the observation period Pz (the period between the times t1 and t2).

The number-of-leaving-terminals calculation unit 23 calculates a difference between the numbers of entering terminals in the respective observation periods Py and Pz with the same end time, as the number of leaving terminals from the observation area during a period between the start time of the observation period Py and the start time of the observation period Pz (the period between the times t0 and t1). For example, when the number of entering terminals in the observation period Py is "3" and the number of entering terminals in the observation period Pz is "5", the number-of-leaving-terminals calculation unit 23 calculates the difference "2" between them, as the number of leaving terminals from the observation area during the period between the start time of the observation period Py and the start time of the observation period Pz (the period between the times t0 and t1).

In next step S45, the number-of-out/in-terminals calculation unit 24 then subtracts the number of leaving terminals from the number of entering terminals calculated for a given period, to calculate the number of out/in terminals in the same period.

Furthermore, in next step S46, the output unit 19 outputs the terminal-entry-count, number of entering terminals, number of leaving terminals, and number of out/in terminals obtained by the above processing. It is a matter of course that the output unit 19 may output one or more of these, instead of all of them. The output herein includes a variety of output modes such as the display output, voice output, and print output.

The third embodiment as described above makes it feasible to obtain the number of entering terminals and the number of leaving terminals from the terminal-entry-counts obtained in the estimation and further obtain the number of out/in terminals.

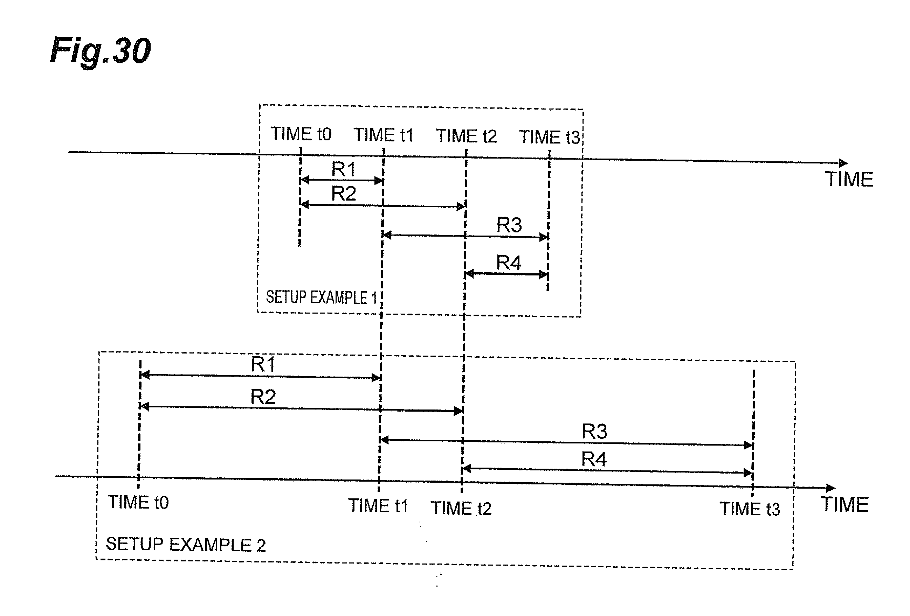

The observation periods necessary for the calculation of the number of entering terminals or the number of leaving terminals will be described below using Fig. 30. Times t0 to t3 in the below description are arranged in a chronological order of times t0, t1, t2, and t3 as shown in Fig. 30, an observation period in the range between the times t0 and t1 is called "observation period R1", an observation period in the range between the times t0 and t2 "observation period R2", an observation period in the range between the times t1 and t3 "observation period R3", and an observation period in the range between the times t2 and t3 "observation period R4".

When it is supposed in the calculation of the number of entering terminals that a period as a target for the calculation is, for example, a period between the times t1 and t2, the observation periods necessary for the calculation of the number of entering terminals are two observation periods with the same start time t0 and, one with the end time being the time t1 and the other with the end time being the time t2, i.e., the observation periods R1, R2. At this time, it is also necessary to set the start time t0, and the set time may be any time earlier than the time t1, without having to be limited to a specific time. For this reason, as shown in setup examples 1 and 2 in Fig. 30, the observation periods R1, R2 necessary for the calculation of the number of entering terminals can be freely set by setting the end times to the times t1, t2 and then varying the start time t0.

Any terminal located in the observation area during at least a part of the period between the times t0 and t1 is not counted in the number of entering terminals in the period between the times t1 and t2, irrespective of whether the terminal has been located in the observation area during the period between the times t1 and t2. For this reason, a terminal counted in the number of entering terminals during the period between the times t1 and t2 can be determined not to be located in the observation area during the period between the times t0 and t1. By taking advantage of this property, the ranges of entering terminals as calculation targets can be changed in the calculation of the number of entering terminals during the period between the times t1 and t2, by varying the start time t0 after setting the end times in the observation periods R1, R2 necessary for the calculation of the number of entering terminals, to the respective times t1, t2 (i.e., by varying the time t0 in the condition of "not located in the observation area during the period between the times t0 and t1").

On the other hand, when in the calculation of the number of leaving terminals the period as a calculation target is, for example, the period between the times t1 and t2, the observation periods necessary for the calculation of the number of leaving terminals are two observation periods with the same end time t3 and, one with the start time being the time t1 and the other with the start time being the time t2, i.e., the observation periods R3, R4. At this time, it is also necessary to set the end time t3, and the set time may be any time after the time t2, without having to be limited to a specific time. For this reason, as shown by setup examples 1, 2 in Fig. 30, the observation periods R3, R4 necessary for the calculation of the number of leaving terminals can be freely set by varying the end time t3 after setting the start times to the times t1, t2.

Any terminal located in the observation area during at least a part of the period between the times t2 and t3 is not counted in the number of leaving terminals during the period between the times t1 and t2, irrespective of whether the terminal has been located in the observation area during the period between the times t1 and t2. For this reason, a terminal counted in the number of leaving terminals during the period between the times t1 and t2 can be determined not to be located in the observation area during the period between the times t2 and t3. By taking advantage of this property, the ranges of leaving terminals as calculation targets can be changed in the calculation of the number of leaving terminals during the period between the times t1 and t2, by varying the end time t3 after setting the start times in the observation periods R3, R4 necessary for the calculation of the number of leaving terminals, to the respective times t1, t2 (i.e., by varying the time t3 in the condition of "not located in the observation area during the period between the times t2 and t3").

A specific example of the variation of the start time t0 or the end time t3 as described above will be described in the fourth embodiment.

For calculating the number of out/in terminals during the period between the times t1 and t2, it is necessary to obtain the number of entering terminals and the number of leaving terminals during the same period (the period between the times t1 and t2), but the ranges of entering terminals and leaving terminals as a basis for the calculation of the number of out/in terminals can be changed by varying the times t0, t3 as described above, in the respective calculations of the number of entering terminals during the period between the times t1 and t2 and the number of leaving terminals during the period between the times t1 and t2. A specific effect will be described in a specific example of the fourth embodiment.

The third embodiment showed the example wherein the terminal-entry-count estimation device 10 was provided with the number-of-entering-terminals calculation unit 22, the number-of-leaving-terminals calculation unit 23, and the number-of-out/in-terminals calculation unit 24 to calculate the number of entering terminals, the number of leaving terminals, and the number of out/in terminals, but it should be noted that it is not indispensable to provide the device with all of the number-of-entering-terminals calculation unit 22, number-of-leaving-terminals calculation unit 23, and number-of-out/in-terminals calculation unit 24, and that the device may be provided with only the number-of-entering-terminals calculation unit 22 or with only the number-of-leaving-terminals calculation unit 23 out of them.

The location data extraction method by the extraction unit 12 does not have to be limited to the above method, but another method, e.g., the method in the first embodiment (the method to calculate the estimated visit duration of each terminal in the observation area and use the estimated visit duration of each terminal) may be adopted, with the same effect. This also applies similarly to each of embodiments described below, as well as the third embodiment.

[Fourth embodiment]

The fourth and fifth embodiments below will describe processing to obtain the number of entering persons and the number of leaving persons from the terminal-entry-counts obtained in the estimation. Of these, the fourth embodiment will describe an embodiment to estimate person-entry-counts from terminal-entry-counts and scaling factors and then to obtain the number of entering persons and the number of leaving persons from the person-entry-counts obtained, whereas the fifth embodiment will describe an embodiment to calculate numbers of entering terminals and numbers of leaving terminals from terminal-entry-counts in respective population estimation units (e.g., attributes, times, or the like) being calculation units of scaling factor and thereafter to obtain the number of entering persons and the number of leaving persons by using the scaling factors in the respective population estimation units.

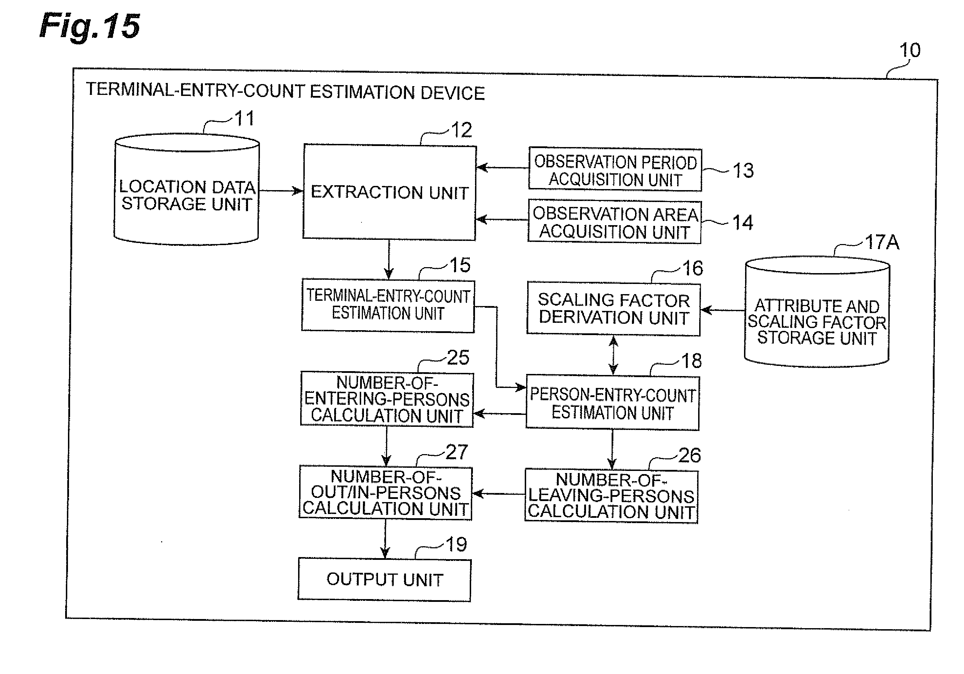

As shown in Fig. 15, the terminal-entry-count estimation device 10 in the fourth embodiment is provided with the location data storage unit 11, extraction unit 12, observation period acquisition unit 13, observation area acquisition unit 14, terminal-entry-count estimation unit 15, and output unit 19 as the terminal-entry-count estimation device (Fig. 2) in the aforementioned first embodiment is. Furthermore, the terminal-entry-count estimation device 10 is provided with an attribute and scaling factor storage unit 17A storing the attribute information of each mobile terminal user and the scaling factors in respective population estimation units obtained in advance, the scaling factor derivation unit 16 to retrieve scaling factors according to attributes of terminal users and times from the attribute and scaling factor storage unit 17A, the person-entry-count estimation unit 18 to estimate a person-entry-count, a number-of-entering-persons calculation unit 25 to calculate the number of entering persons, a number-of-leaving-persons calculation unit 26 to calculate the number of leaving persons, and a number-of-out/in-persons calculation unit 27 to calculate the number of out/in persons.

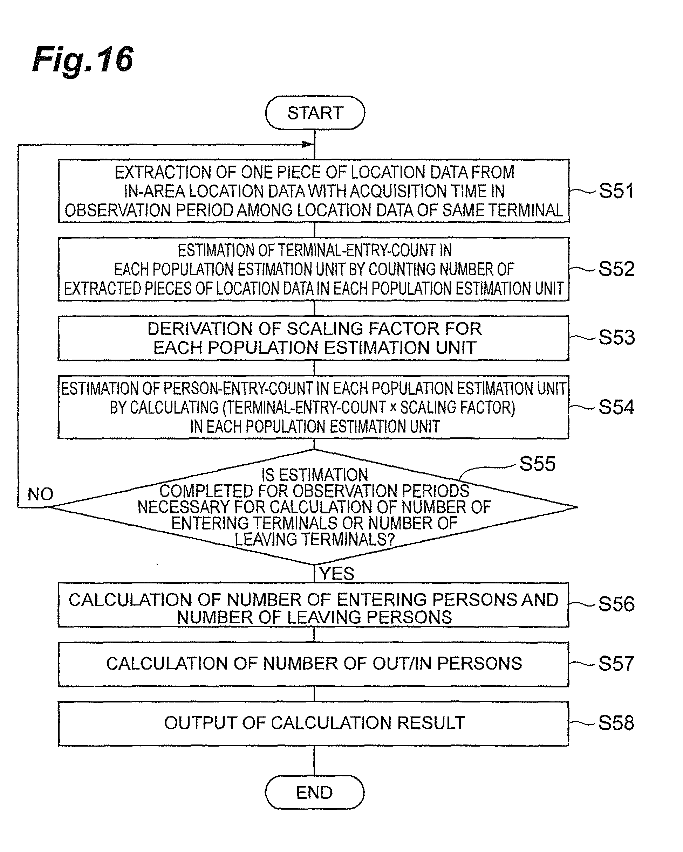

Next, the processing by the terminal-entry-count estimation device 10 in the fourth embodiment will be described using Fig. 16. It is assumed herein, as in the first embodiment, that the location information in the location data of each mobile terminal is, for example, a sector-number of a sector in which the mobile terminal is located, a set of an observation start time and an observation end time are preliminarily acquired as the observation period information by the observation period acquisition unit 13, and a sector-number S is preliminarily acquired as the observation area information by the observation area acquisition unit 14. It is also assumed that the location data storage unit 11 preliminarily acquires and stores the location data from the outside. The foregoing observation period information is set to be information of observation periods necessary for the calculation of the number of entering persons or the number of leaving persons described below.

In step S51 shown in Fig. 16, the extraction unit 12 extracts a piece of location data (location data with the earliest acquisition time, as an example) out of the in-area location data of which the acquisition time is within the observation period, among the location data of the same terminal. When a piece of location data is extracted for each terminal in this manner, the accuracy of extraction is slightly lower than in the method in the first embodiment (the method to calculate the estimated visit duration of each terminal in the observation area and use the estimated visit duration of each terminal), but a piece of location data can be extracted terminal by terminal with a lower processing load because there is no need for calculation of the estimated visit duration for each terminal. When a piece of location data is extracted for each terminal, it is not indispensable to extract the location data with the earliest acquisition time, but another piece of location data may be extracted. For example, the extraction unit 12 may extract the location data with the last acquisition time or the location data of which the acquisition time is the closest to an exact center point of the observation period.

In next step S52, the terminal-entry-count estimation unit 15 counts the number of extracted pieces of location data in each of the population estimation units to estimate terminal-entry-counts in the respective population estimation units, and in step S53 the scaling factor derivation unit 16 retrieves the scaling factors in the respective population estimation units from the attribute and scaling factor storage unit 17A. The scaling factor derivation unit 16 may derive the scaling factors, instead of retrieving the scaling factors from the attribute and scaling factor storage unit 17A. An example of the derivation method will be described later.

In next step S54, the person-entry-count estimation unit 18 multiplies the terminal-entry-count by the scaling factor in each of the population estimation units and estimates the result of the multiplication to be a person-entry-count in each of the population estimation units.

The above processes in steps S51 to S54 are executed as to the observation periods necessary for the below-described calculation of the number of entering persons or the number of leaving persons.

After the processes in steps S51 to S54 are completed as to the observation periods necessary for the calculation of the number of entering persons or the number of leaving persons, the flow then proceeds to step S56 to perform the calculation of the number of entering persons by the number-of-entering-persons calculation unit 25 and the calculation of the number of leaving persons by the number-of-leaving-persons calculation unit 26 as described below. The calculation methods of the number of entering persons and the number of leaving persons are the same as the calculation methods of the number of entering terminals and the number of leaving terminals in the third embodiment described using Fig. 14.

Namely, we can assume a case resulting from replacement of "terminal-entry-counts" by "person-entry-counts" in Fig. 14, and it is assumed, for example, that the person-entry-count estimation unit 18 has calculated the person-entry-count in the observation period Px between the start time t0 and the end time t1, the person-entry-count in the observation period Py between the start time t1 and the end time t2, and the person-entry-count in the observation period Pz between the start time t0 and the end time t2.

At this time, the number-of-entering-persons calculation unit 25 calculates a difference between the person-entry-counts in the respective observation periods Px and Pz with the same start time, as the number of entering persons into the observation area during the period between the end time of the observation period Px and the end time of the observation period Pz (the period between the times t1 and t2). For example, when the person-entry-count in the observation period Px is "4" and the person-entry-count in the observation period Pz is "5", the number-of-entering-persons calculation unit 25 calculates the difference "1" between them, as the number of entering persons into the observation area during the period between the end time of the observation period Px and the end time of the observation period Pz (the period between the times t1 and t2).

Furthermore, the number-of-leaving-persons calculation unit 26 calculates a difference between the person-entry-counts in the respective observation periods Py and Pz with the same end time, as the number of leaving persons from the observation area during the period between the start time of the observation period Py and the start time of the observation period Pz (the period between the times t0 and t1). For example, when the person-entry-count in the observation period Py is "3" and the person-entry-count in the observation period Pz is "5", the number-of-leaving-persons calculation unit 26 calculates the difference "2" between them, as the number of leaving persons from the observation area during the period between the start time of the observation period Py and the start time of the observation period Pz (the period between the times t0 and t1).

In step S56, the number-of-entering-persons calculation unit 25 calculates the numbers of entering persons in the respective population estimation units as described above. Thereafter, it may sum up the numbers of entering persons in the respective population estimation units to calculate a total number of entering persons. Similarly, the number-of-leaving-persons calculation unit 26 calculates the numbers of leaving persons in the respective population estimation units as described above. Thereafter, it may sum up the numbers of leaving persons in the respective population estimation units to calculate a total number of leaving persons.

In next step S57, the number-of-outlin-persons calculation unit 27 then subtracts the number of leaving persons from the number of entering persons in the same period and in the same population estimation unit to calculate the number of out/in persons about the same period and population estimation unit. At this time, it may subtract the total number of leaving persons from the total number of entering persons to calculate a total number of out/in persons.

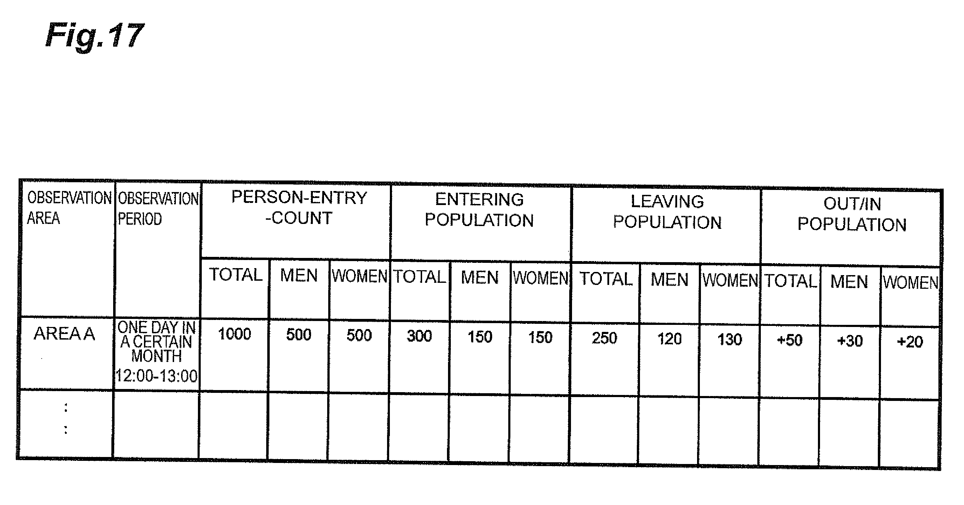

Furthermore, in next step S58, the output unit 19 outputs the person-entry-counts, numbers of entering persons, numbers of leaving persons, and numbers of out/in persons in the respective population estimation units and the total-person-entry-count, number of entering persons, number of leaving persons, and number of out/in persons which were obtained by the above processing. It is a matter of course that the output unit 19 may output one or more of these, instead of all of them. In this step, for example as shown in Fig. 17, concerning each of the person-entry-count, number of entering persons, number of leaving persons, and number of out/in persons, a total value and values in the respective population estimation units (genders as an example herein) may be output. It is also possible to adopt a combinational condition of multiple population estimation units (e.g., a condition of "women residing in Tokyo" as a combination of a gender and an address). The output herein includes a variety of output modes such as the display output, voice output, and print output.

The fourth embodiment as described above makes it feasible to determine the person-entry-counts from the terminal-entry-counts obtained in the estimation and further obtain the number of entering persons, the number of leaving persons, and the number of out/in persons in each of the population estimation units or in a total thereof.

The below will describe the observation periods necessary for the calculation of the number of entering persons or the number of leaving persons, using Fig. 30. When in the calculation of the number of entering persons a duration expected to be a calculation target is, for example, a period between the times t1 and t2, the observation periods necessary for the calculation of the number of entering persons are two observation periods with the same start time t0 and, one with the end time being the time t1 and the other with the end time being the time t2, i.e., the observation periods R1, R2 in Fig. 30. As shown in the setup examples 1, 2 in Fig. 30, the observation periods R1, R2 necessary for the calculation of the number of entering persons can be freely set by varying the start time t0 after setting the end times to the times t1, t2. As described in the third embodiment, the ranges of numbers of entering persons as calculation targets can be changed by varying the start time t0 after setting the end times in the observation periods R1, R2 necessary for the calculation of the number of entering persons, to the respective times t1, t2 (i.e., by varying the time t0 in the condition of "not located in the observation area during the period between the times t0 and t1"). The foregoing point in the calculation of the number of entering persons is also true similarly in the calculation of the number of leaving persons, as discussed in the third embodiment.

A specific example will be described below. For example, in a situation in which an event is held for five days from April 1 to April 5 and a desired target to be calculated is the number of entering persons into an event site during a period from 12:00 to 13:00 on April 3, 12:00 on April 3 is set as the end time t1 of one and 13:00 on April 3 as the end time t2 of the other of the two observation periods necessary for the calculation of the number of entering persons.

If the start time t0 is set to 00:00 on April 3 as setup example 1 in Fig. 30, the population to be calculated is a population of persons not located in the event site during the period between the times t0 and t1 (between 00:00 April 3 to 12:00 April 3) (i.e., a population of persons newly entering the event site during the period between 12:00 and 13 : 00 on April 3, regardless of status of the persons on April 1 to April 2). On the other hand, if the start time t0 is set to 00: 00 on April 1 as setup example 2 in Fig. 30 (the example in which the start time t0 is set backward from that in setup example 1), the population to be calculated is a population of persons not located in the event site during the period between the times t0 and t1 (between 00:00 April 1 and 12:00 April 3) (i.e., a population of persons newly entering the event site during the period between 12:00 and 13:00 on April 3 in view of the beginning of the event period). The ranges of numbers of entering persons as calculation targets can be freely changed by varying the start time t0 as described above.

If the population to be calculated is the number of leaving persons from the event site during the period between 12:00 and 13:00 on April 3, 12:00 on April 3 is set to the start time t1 of one and 13:00 on April 3 to the start time t2 of the other of the two observation periods necessary for the calculation of the number of leaving persons.

If the end time t3 is set to 00:00 on April 4 as setup example 1 in Fig. 30, the population to be calculated is a population of persons not located in the event site during the period between the times t2 and t3 (between 13:00 April 3 and 00:00 April 4) (i.e., a population of persons not located in the event site after 13:00 on April 3, regardless of status of the persons on April 4 to April 5). On the other hand, if the end time t3 is set to 00:00 on April 6 as setup example 2 in Fig. 30 (the example in which the end time t3 is set forward from that in setup example 1), the population to be calculated is a population of persons not located in the event site during the period between the times t2 and t3 (between 13:00 April 3 and 00:00 April 6) (i.e., a population of persons not located in the event site during the period after 13:00 on April 3 in the event duration). The ranges of numbers of leaving persons as calculation targets can be freely changed by varying the end time t3 as described above.

When the population to be calculated is the number of out/in persons during the period between the times t1 and t2, it is necessary to obtain the number of entering persons and the number of leaving persons in the same period (the period between the times t1 and t2), and, as described above, the ranges of the numbers of entering persons and the numbers of leaving persons as calculation targets can be changed in the respective calculations of the number of entering persons during the period between the times t1 and t2 and the number of leaving persons during the period between the times t1 and t2. For example, when the number of entering persons and the number of leaving persons are calculated in the same period between the times t1 and t2, if the setup example 2 in Fig. 30 is such that the start time t0 in the calculation of the number of entering persons is set to 00:00 on April 1 and the end time t3 in the calculation of the number of leaving persons is set to 00:00 on April 6, the number of out/in persons can be obtained as the number of out/in persons during the period between the times t1 and t2 in view of the entire event duration, i.e., "a difference obtained by subtracting a population of persons leaving the event site during the period between the times t1 and t2 and not reentering before the end of the event duration, from a population of persons newly entering the event site during the period between the times t1 and t2 in view of the beginning of the event duration". On the other hand, when the setup example 1 in Fig. 30 is such that the start time t0 in the calculation of the number of entering persons is set to 00:00 on April 3 and the end time t3 in the calculation of the number of leaving persons is set to 00:00 on April 4, the number of out/in persons during the period between the times t1 and t2 with focus on April 3 only is obtained without consideration to entry and exit on the days other than April 3 during the event duration; i.e., the number of out/in persons can be obtained as "a difference obtained by subtracting a population of persons leaving the event site during the period between the times t1 and t2 and not reentering in the day of April 3, from a population of persons newly entering the event site during the period between the times t1 and t2 on April 3".

The fourth embodiment showed the example wherein the terminal-entry-count estimation device 10 was provided with the number-of-entering-persons calculation unit 25, the number-of-leaving-persons calculation unit 26, and the number-of-out/in-persons calculation unit 27 to calculate the number of entering persons, number of leaving persons, and number of out/in persons, but it should be noted that it is not indispensable to provide the device with all of the number-of-entering-persons calculation unit 25, number-of-leaving-persons calculation unit 26, and number-of out/in-persons calculation unit 27 and that the device may be provided with only the number-of-entering-persons calculation unit 25 or with only the number-of-leaving-persons calculation unit 26 out of them. This point is also the case in each of embodiments described below, as well as the fourth embodiment.

The above embodiment described the example in which the scaling factor was preliminarily obtained, but the scaling factor may be derived as follows. The scaling factor to be used herein as an example can be a reciprocal of "a product of a presence rate and a terminal penetration rate (i.e., a ratio of a presence count to a population)". The "presence rate" herein means a rate of a presence count to the number of subscriptions, and the "penetration rate" means a rate of the number of subscriptions to a population. It is preferable to derive such a scaling factor in each of the aforementioned scaling factor calculation units, but it is not essential. The scaling factor may be derived, for example, using the number of terminals (presence count) estimated based on the feature amounts and the length of the observation period as described below. The feature amounts are determined from the location data by the technique as described in the first embodiment, the numbers of terminals in respective scaling factor calculation units are totalized based on the feature amounts and the length of the observation period to obtain user count pyramid data, and population pyramid data in the same scaling factor calculation units preliminarily obtained as statistical data (e.g., The Basic Resident Register or the like) is acquired. Then an acquisition rate of location data in each of the scaling factor calculation units (i.e., presence count/population in each unit) is calculated with the user count pyramid data and the population pyramid data. The "acquisition rate of location data (i.e., presence count/population)" obtained herein corresponds to the aforementioned "product of a presence rate and a terminal penetration rate". Reciprocals of the "acquisition rates of location data" obtained in this manner can be derived as the scaling factors. The scaling factor calculation units for calculation of the scaling factors to be adopted herein may be, for example, prefectures of addresses, age groups at intervals of 5 years or 10 years, genders, one-hour zones as time zones, and so on, or may be a combination of two or more of them. For example, when a scaling factor calculation unit is "men in their twenties residing in Tokyo", the location data corresponding to men in their twenties residing in Tokyo (i.e., of which address information in user attributes is Tokyo) is extracted in the whole of Japan and the number of terminals is counted to obtain user count pyramid data, and the population pyramid data about men in their twenties residing in Tokyo is acquired from the statistical data. In the acquisition of the above user count pyramid data, the condition of "residing in Tokyo" is not to extract only the location data of users residing in Tokyo, but to extract the location data of which the address information in user attributes is Tokyo. Then an acquisition rate of location data (i.e., presence count/population) in the scaling factor calculation unit (men in their twenties residing in Tokyo herein) is calculated from the user count pyramid data and the population pyramid data, and a reciprocal of the "acquisition rate of location data" thus obtained can be derived as a scaling factor. In the present specification the scaling factor calculation units are described as equal to the population estimation units, but this is just an example, without need for being limited to this example.

[Fifth embodiment]

The fifth embodiment will describe an embodiment to calculate the number of entering terminals and the number of leaving terminals from terminal-entry-counts in each of population estimation units and thereafter obtain the numbers of entering persons and numbers of leaving persons using the scaling factors in the respective population estimation units.

In the fifth embodiment, the terminal-entry-count estimation device 10 shown in Fig. 15 is configured so that the estimation of the person-entry-count by the person-entry-count estimation unit 18 is not carried out and so that the number-of-entering-persons calculation unit 25 calculates the number of entering terminals based on the difference between terminal-entry-counts in respective observation periods with the same start time and thereafter calculates the number of entering persons based on the scaling factor according to the population estimation unit and the calculated number of entering terminals. Similarly, the number-of-leaving-persons calculation unit 26 calculates the number of leaving terminals based on the difference between terminal-entry-counts in respective observation periods with the same end time and thereafter calculates the number of leaving persons based on the scaling factor according to the population estimation unit and the calculated number of leaving terminals.

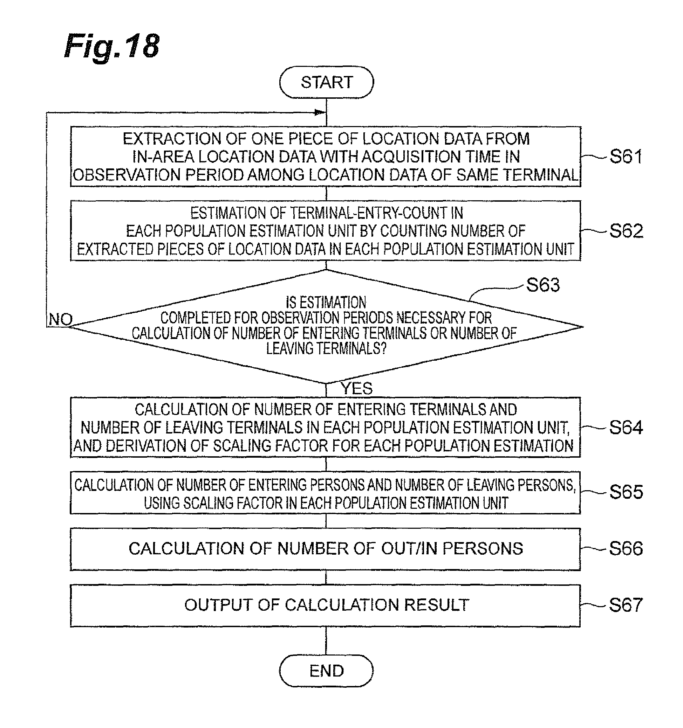

The processing in the fifth embodiment will be described below with focus on differences from the fourth embodiment, using Fig. 18.

The extraction unit 12 extracts a piece of location data (e.g., location data with the earliest acquisition time) out of the in-area location data of which the acquisition time is within the observation period, among the location data of the same terminal (step S61 in Fig. 18) and the terminal-entry-count estimation unit 15 counts the number of extracted pieces of location data in each of population estimation units to estimate terminal-entry-counts in the respective population estimation units (step S62). The terminal-entry-counts in the respective population estimation units thus obtained are fed via the person-entry-count estimation unit 18 to the number: of entering-persons calculation unit 25 and the number-of-leaving-persons calculation unit 26.

The above processes in steps S61-S62 are executed as to the observation periods necessary for the calculation of the number of entering persons or the number of leaving persons described in the fourth embodiment. After completion of the processes in steps S61-S62 as to the observation periods necessary for the calculation of the number of entering persons or the number of leaving persons, step S64 is then carried out so that the number-of-entering-persons calculation unit 25 calculates as the number of entering terminals, a difference between terminal-entry-counts in the respective observation periods with the same start time, in each of the population estimation units. Furthermore, the number-of-leaving-persons calculation unit 26 calculates as the number of leaving terminals, a difference between terminal-entry-counts in the respective observation periods with the same end time, in each of the population estimation units. At the same time as it, the scaling factor derivation unit 16 retrieves the scaling factors in the respective population estimation units from the attribute and scaling factor storage unit 17A and sends them via the person-entry-count estimation unit 18 to the number-of-entering-persons calculation unit 25 and the number-of-leaving-persons calculation unit 26.

In next step S65, the number-of-entering-persons calculation unit 25 multiplies the number of entering terminals by the scaling factor in each of the population estimation units and defines the result of the multiplication as the number of entering persons in each of the population estimation units. Thereafter, the number-of-entering-persons calculation unit 25 may sum up the numbers of entering persons in the respective population estimation units to calculate a total number of entering persons. Similarly, the number-of-leaving-persons calculation unit 26 multiplies the number of leaving terminals by the scaling factor in each of the population estimation units and defines the result of the multiplication as the number of leaving persons in each of the population estimation units. Thereafter, the number-of-leaving-persons calculation unit 26 may sum up the numbers of leaving persons in the respective population estimation units to calculate a total number of leaving persons.

In next step S66, the number-of out/in-persons calculation unit 27 then subtracts the number of leaving persons from the number of entering persons in the same period and in the same population estimation unit to calculate the number of out/in persons about the same period and population estimation unit. At this time, a total number of out/in persons may be calculated by subtracting the total number of leaving persons from the total number of entering persons. Furthermore, in next step S67 the output unit 19 outputs the numbers of entering persons, numbers of leaving persons, and numbers of out/in persons in the respective population estimation units and the total number of entering persons, number of leaving persons, and number of out/in persons which were obtained by the above processing.

The fifth embodiment as described above makes it feasible to obtain the number of entering persons, number of leaving persons, and number of out/in persons in each of the population estimation units or in a total thereof, from the terminal-entry-counts obtained in the estimation.

[Sixth embodiment]

The sixth and seventh embodiments below will describe examples in which estimated values (person-entry-counts, terminal-entry-counts, and so on) in respective areas of totalization units are converted into estimated values in respective output units (meshes as an example herein). The sixth embodiment of them will describe the processing in an environment in which there are communication regions of outdoor stations using a single frequency band, whereas the seventh embodiment will describe the processing in an environment in which there are two or more geographically overlapping communication regions out of communication regions of indoor stations and communication regions of outdoor stations using respective frequency bands with different coverage areas. When the output units are the same as the totalization units, the conversion processes described in the sixth and seventh embodiments below are not needed.

The sixth embodiment will describe the terminal-entry-count estimation device and processing thereof in which the foregoing conversion function into estimated values in respective meshes is added to the terminal-entry-count estimation device to estimate the person-entry-count according to the fourth embodiment.

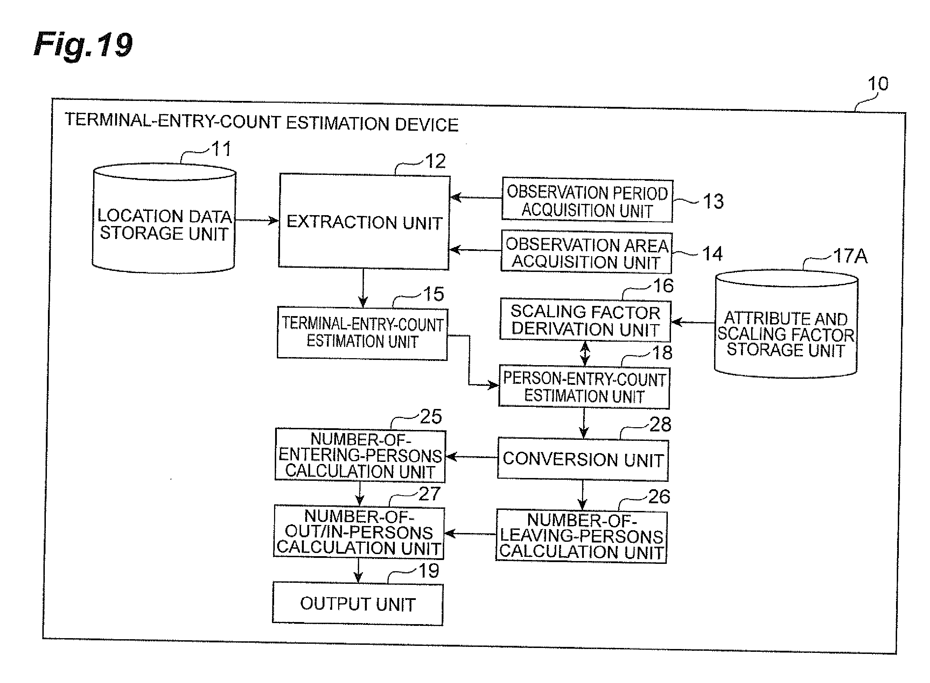

As shown in Fig. 19, the function block configuration of the terminal-entry-count estimation device 10 in the sixth embodiment is a configuration in which a conversion unit 28 is added between the number-of-entering-persons estimation unit 25 and the person-entry-count estimation unit 18 and between the number-of-leaving-persons calculation unit 26 and the person-entry-count estimation unit 18 in the function block configuration of the terminal-entry-count estimation device in the fourth embodiment (Fig. 15). The conversion unit 28 converts the estimated values in respective observation areas into estimated values in respective output units (e.g., meshes) different from the observation areas.

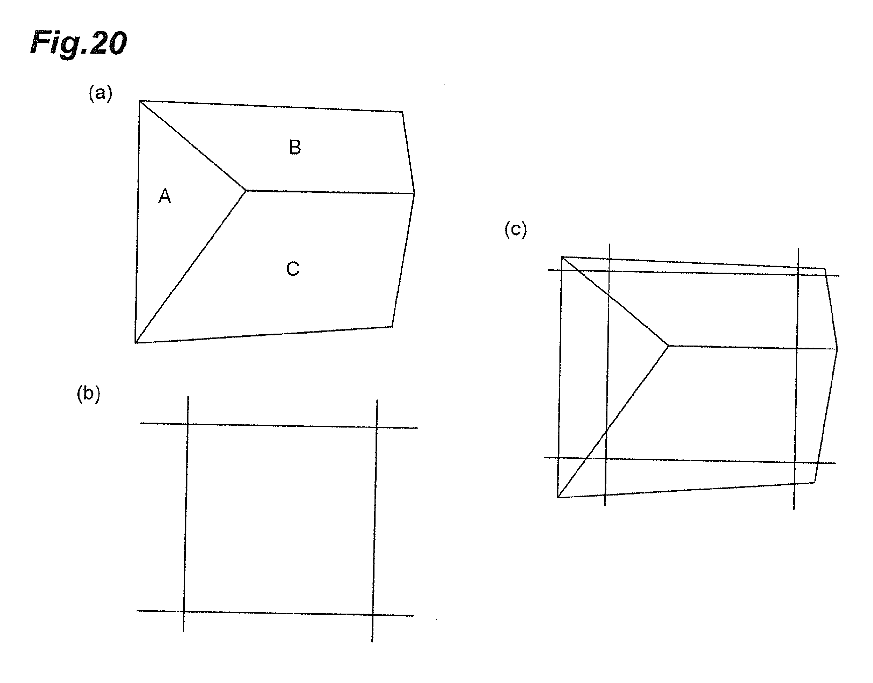

The processing of the conversion unit 28 will be described below in detail on the basis of Fig. 20. Fig. 20 (a) is a drawing showing area ranges of respective areas, Fig. 20 (b) a drawing showing meshes, and Fig. 20 (c) a composite chart as a combination of the areas and the meshes.

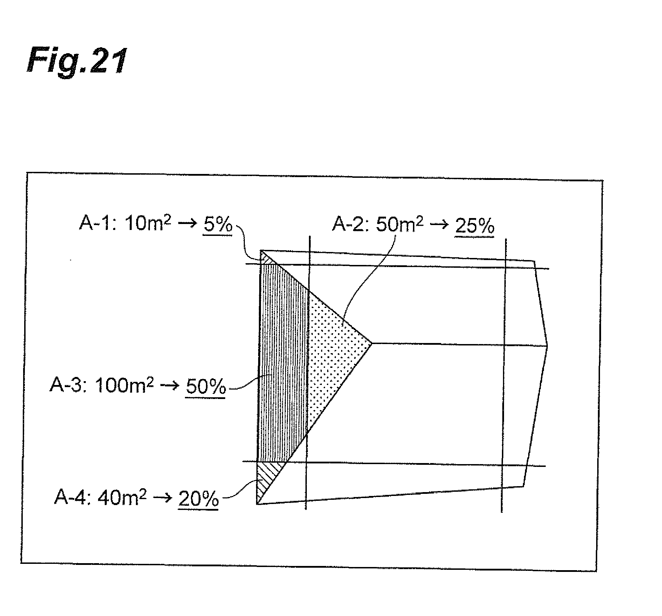

The conversion unit 28 combines an area map (cf. Fig. 20 (a)) reproduced based on preliminarily-stored area border information, with two-dimensional meshes (cf. Fig. 20 (b)) reproduced based on a predetermined division rule, to obtain the composite chart as shown in Fig. 20 (c). Next, the conversion unit 24 divides each area by mesh borders in the foregoing composite chart. For example, as shown in Fig. 21, area A in Fig. 20 (a) is divided into four divided areas A-1, A-2, A-3, and A-4 by mesh borders. Then the conversion unit 28 calculates the areas of the respective divided areas and calculates area ratios of the respective divided areas. For example, as shown in Fig. 21, supposing that the areas of the divided areas A-1, A-2, A-3, and A-4 are calculated as 10 m$^2$, 50 m$^2$, 100 m$^2$, and 40 m$^2$, respectively, the area ratios (e.g., percentages) of the respective divided areas A-1, A-2, A-3, and A-4 are calculated as 5%, 25%, 50%, and 20%.

It is not indispensable for the conversion unit 28 to calculate the area ratios of the respective divided areas. It is possible, for example, to adopt a configuration in which the area ratios of the respective divided areas are preliminarily determined and in which the conversion unit 28 can retrieve the information on the area ratios of the respective divided areas with reference to an unrepresented table in the terminal-entry-count estimation device 10 or from the outside. As another example, it is also possible to adopt a configuration wherein the extraction unit 12 makes each extracted piece of location data associated with at least one combination of output unit IDs about respective output units geographically overlapping with an area to which the piece of location data belongs, and area ratios of overlap regions (divided areas) with the output units (i.e., area ratios of overlap regions (divided areas) to a total of totalization units) and wherein the location data after so associated is transferred via the terminal-entry-count estimation unit 15 and the person-entry-count estimation unit 18 to the conversion unit 28.

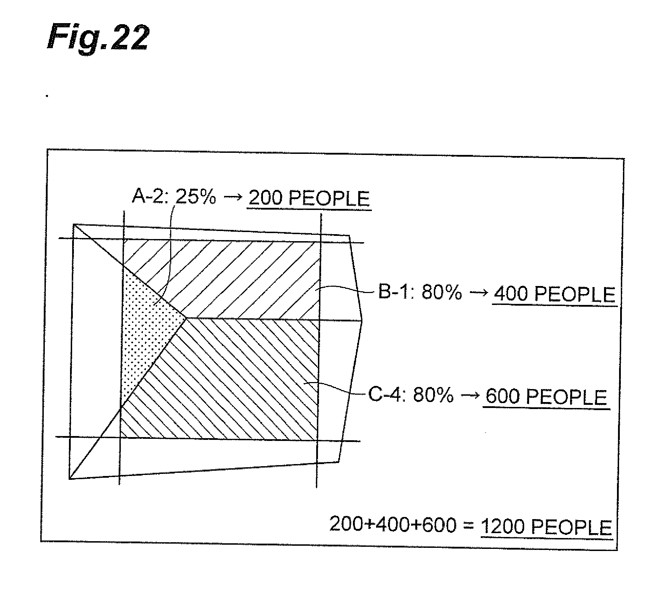

Next, the conversion unit 28 calculates estimated values in the respective divided areas (person-entry-counts herein as an example). For example, supposing that a person-entry-count in area A in Fig. 20 (a) is 800, a person-entry-count in the divided area A-2 is calculated as 200 (i.e., 800 × 25%) as shown in Fig. 22. Similarly, supposing that person-entry-counts in the areas B and C are 500 and 750, a person-entry-count in the divided area B-1 with the area ratio of 80% in the area B is calculated as 400 (i.e., 500 × 80%) and a person-entry-count in the divided area C-4 with the area ratio of 80% in the area C is calculated as 600 (i.e., 750 × 80%).

Furthermore, the conversion unit 28 calculates the sum of the person-entry-counts in the plurality of divided areas included in one mesh to calculate a person-entry-count in the mesh. In the example of Fig. 22, the conversion unit 28 calculates a total of the person-entry-counts in the divided areas A-2, B-1, and C-4 included in one mesh, as 1200 (i.e., 200 + 400 + 600) and defines this 1200 as a person-entry-count in the mesh.

As described above, the estimated values in respective totalization units (person-entry-counts, terminal-entry-counts, and so on) can be converted into estimated values in respective output units, in the environment in which there are communication regions of outdoor stations using a single frequency band.

The sixth embodiment described the processing to convert the person-entry-counts in respective totalization units into the person-entry-counts in respective output units on the basis of the fourth embodiment, and the conversion process described in the sixth embodiment is also applicable to cases where the estimated values in respective totalization units, concerning various estimated values (e.g., terminal-entry-counts, numbers of entering terminals, numbers of leaving terminals, numbers of out/in terminals, numbers of entering persons, numbers of leaving persons, numbers of out/in persons, and so on), are converted into the estimated values in respective output units, and can also be applied to the first to third and fifth embodiments.

[Seventh embodiment]

The seventh embodiment will describe an example in which estimated values (person-entry-counts, terminal-entry-counts, and so on) in respective areas (sectors) of totalization units are converted into estimated values in respective output units (meshes as an example herein), in an environment where there are at least two geographically overlapping communication regions out of communication regions of indoor stations and communication regions of outdoor stations using respective frequency bands with different coverage areas.

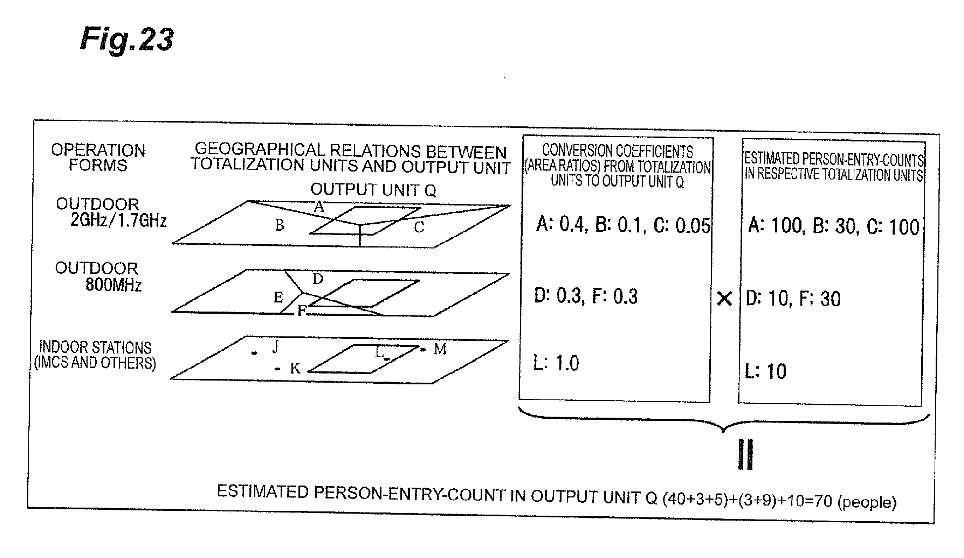

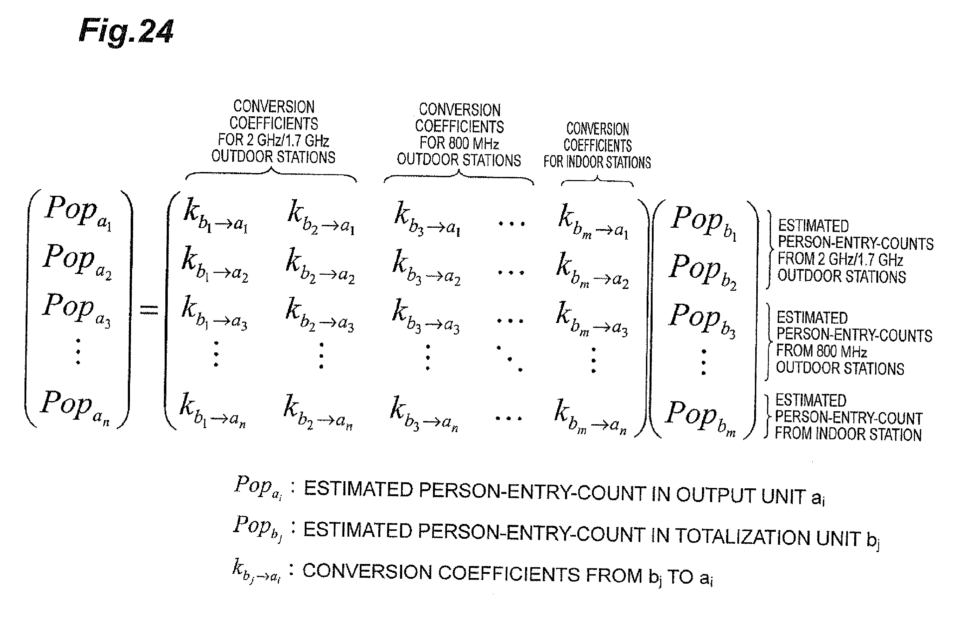

The function block configuration of the terminal-entry-count estimation device in the seventh embodiment is the same as in the sixth embodiment, except for the processing of the conversion unit 28, and therefore the processing of the conversion unit 28 will be described below on the basis of Figs. 23 and 24.

In an environment where there are geographically overlapping communication regions among communication regions of indoor stations and communication regions of outdoor stations using respective frequency bands with different coverage areas (outdoor 2 GHz/1.7 GHz and outdoor 800 MHz), as shown in Fig. 23, the conversion unit 28 performs the conversion process described in the sixth embodiment, for each of the communication regions, to obtain estimated values (person-entry-counts as an example herein) in respective output units (meshes) about the respective communication regions, and finally totalizes the person-entry-counts estimated about the respective communication regions (which will be referred to hereinafter as "estimated person-entry-counts") in each of output units to obtain estimated person-entry-counts in the respective output units.

In the example of Fig. 23, the conversion unit 28 first performs the conversion process described in the sixth embodiment, for each of the communication regions of the outdoor stations using outdoor 2 GHz/1.7 GHz, the communication regions of the outdoor stations using outdoor 800 MHz, and the communication regions of the indoor stations. For example, in the communication regions of the outdoor stations using outdoor 2 GHz/1.7 GHz, supposing that a divided area as an overlap between output unit Q and area A has an area ratio of 40% to the entire area of area A, an estimated person-entry-count of 100 in area A is multiplied by the area ratio of 0.4 to obtain an estimated person-entry-count of 40 for the divided area as an overlap between output unit Q and area A. Similarly, an estimated person-entry-count of 3 is obtained for a divided area as an overlap between output unit Q and area B (estimated person-entry-count of 30 in area B × area ratio of 0.1), and an estimated person-entry-count of 5 is obtained for a divided area as an overlap between output unit Q and area C (estimated person-entry-count of 100 in area C × area ratio of 0.05). Concerning the communication regions of the outdoor stations using outdoor 800 MHz, similarly, an estimated person-entry-count of 3 is obtained for a divided area as an overlap between output unit Q and area D (estimated person-entry-count of 10 in area D × area ratio of 0.3), and an estimated person-entry-count of 9 is obtained for a divided area as an overlap between output unit Q and area F (estimated person-entry-count of 30 in area F × area ratio of 0.3). On the other hand, concerning the indoor stations, the areas of the individual indoor stations as coverage areas are very small, and in the example of Fig. 23, the whole of area L of one indoor station overlaps the output unit Q; therefore, the area ratio can be considered to be 100%. Therefore, an estimated person-entry-count of 10 in area L is multiplied by the area ratio 1.0 to obtain an estimated person-entry-count of 10 for the area as an overlap between output unit Q and area L (the whole of area L in this example).

Finally, the conversion unit 28 totalizes the estimated person-entry-counts of the overlapping areas between output unit Q and each of the areas, which were obtained as described above, to obtain an estimated person-entry-count of 70 in output unit Q. In the manner as described above, the person-entry-counts in the respective totalization units can be converted into the estimated person-entry-count in output unit Q.

Fig. 23 shows the conversion into the estimated person-entry-count in one output unit Q, but the same process may be executed for other output units to implement the conversion into estimated person-entry-counts in all output units as targets.

Fig. 24 shows a matrix equation for conversion into estimated person-entry-counts in n output units as targets. Namely, in the right-hand side of the equation of Fig. 24, the following components:

$$Pop_{b_j}$$

(where j is an integer of not less than 1 and not more than m (m is the number of totalization units overlapping any one of n output units as targets)) mean person-entry-counts (estimated person-entry-counts) in respective totalization units obtained by estimation; in the left-hand side, the following components:

$$Pop_{a_i}$$

(where i is an integer of not less than 1 and not more than n) mean person-entry-counts in respective output units; in the right-hand side of the matrix equation, the following components:

$$k_{b_j \to a_i}$$

mean conversion coefficients for conversion from person-entry-counts in totalization units $b_j$ into person-entry-counts in output units $a_i$. The conversion coefficients herein correspond to the aforementioned area ratios of divided areas to the entire original area.

Each of the conversion coefficients in Fig. 24 can be preliminarily determined from a positional relation between units in the estimation process of terminal-entry-counts or the like (e.g., areas) and output units (e.g., meshes); when each of the conversion coefficients is preliminarily determined and the equation of Fig. 24 is stored, person-entry-counts (estimated person-entry-counts) in respective totalization units obtained by estimation can be readily and quickly converted into person-entry-counts in respective output units, using the equation of Fig. 24.

In the manner as described above, the person-entry-counts in respective totalization units can be converted into person-entry-counts in respective output units, even in the environment where there are at least two geographically overlapping communication regions out of communication regions of indoor stations and communication regions of outdoor stations using respective frequency bands with different coverage areas.

The seventh embodiment described the process of converting the person-entry-counts in respective totalization units into the person-entry-counts in respective output units, and it should be noted that the conversion process described in the seventh embodiment is also applicable to cases where estimated values in respective totalization units are converted into estimated values in respective output units, as to a variety of estimated values (e.g., the terminal-entry-counts, numbers of entering terminals, numbers of leaving terminals, numbers of out/in terminals, numbers of entering persons, numbers of leaving persons, numbers of out/in persons, and so on), and is also applicable to the aforementioned first to third and fifth embodiments.

The above sixth and seventh embodiments described the examples of converting the person-entry-counts in respective totalization units preliminarily obtained in the estimation, into the person-entry-counts in respective output units, i.e., the examples of estimating the person-entry-counts from the terminal-entry-counts and thereafter converting them into the person-entry-counts in respective output units. Contrary to this example, however, it is also possible to adopt a method of converting the terminal-entry-counts in respective totalization units into terminal-entry-counts in respective output units and thereafter estimating the person-entry-counts in the respective output units from the terminal-entry-counts in the respective output units. For example, the terminal-entry-count estimation device 10 in Fig. 19 is modified into such a configuration that the conversion unit 28 is moved to between the terminal-entry-count estimation unit 15 and the person-entry-count estimation unit 18. In this configuration, the conversion unit 28 converts the terminal-entry-counts in the respective totalization units obtained in the estimation by the terminal-entry-count estimation unit 15, into the terminal-entry-counts in the respective output units, according to the same procedure as in the above sixth and seventh embodiments. Then the person-entry-count estimation unit 18 can estimate the person-entry-counts in the respective output units from the terminal-entry-counts in the respective output units, according to the same procedure as in the above fourth embodiment.

[Eighth embodiment]

The eighth embodiment will describe an embodiment to perform an unidentifiability securing process for removing information with individual identifiability from the location data and the attribute information.

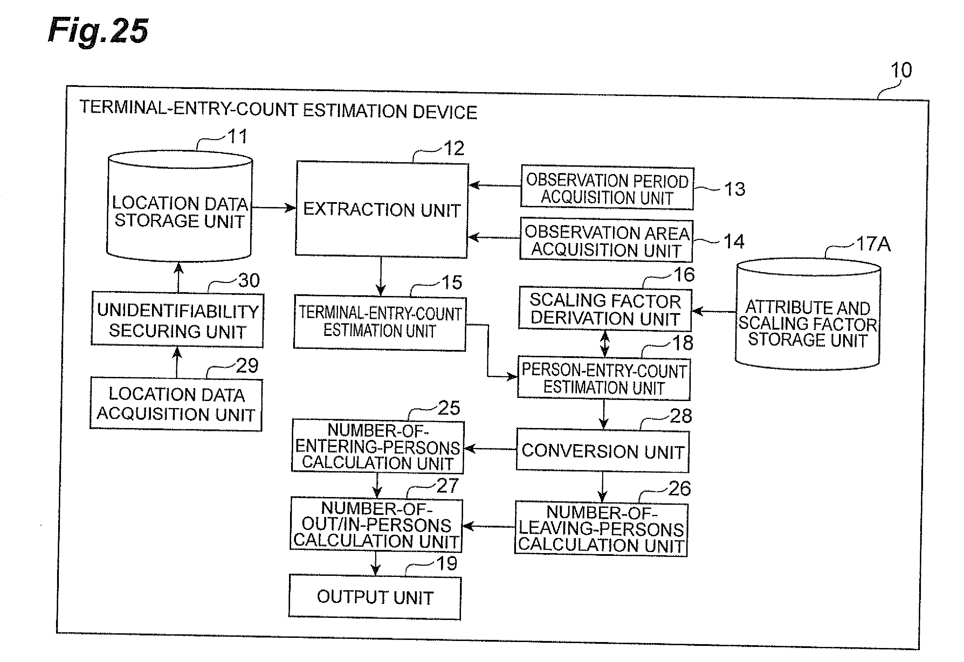

As shown in Fig. 25, the function block configuration of the terminal-entry-count estimation device 10 in the eighth embodiment is a configuration wherein a location data acquisition unit 29 to acquire the location data from the outside and an unidentifiability securing unit 30 to perform the unidentifiability securing process are added to the function block configuration of the terminal-entry-count estimation device in the sixth embodiment (Fig. 19).

The location data acquisition unit 29 acquires the location data on-line via a wired or wireless communication network or off-line via a recording medium or the like from the outside, and sends the location data to the unidentifiability securing unit 30.

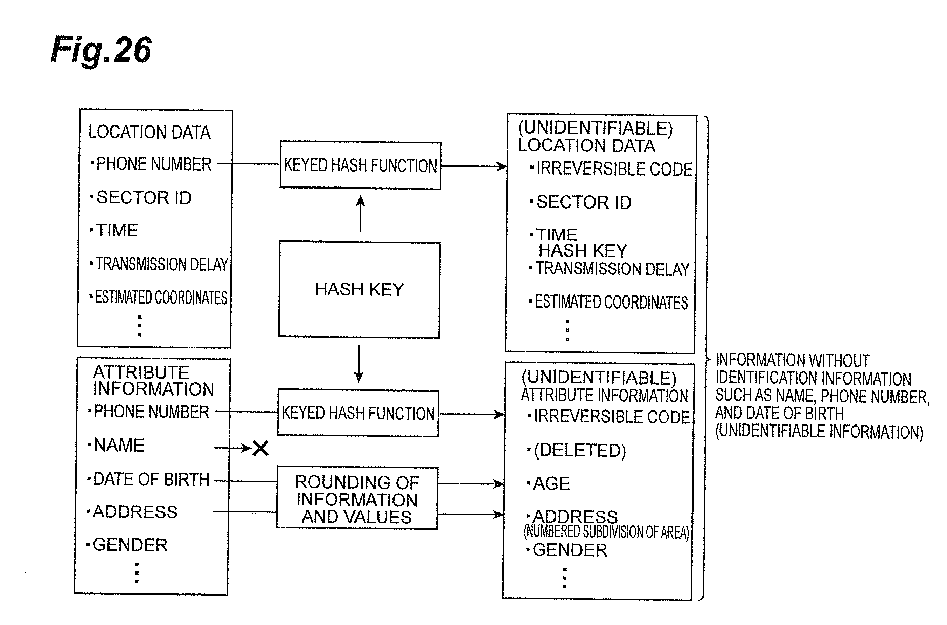

The unidentifiability securing unit 30 performs the unidentifiability securing process including conversion into irreversible code by a one-way function, on the identification information (e.g., a phone number) included in the location data. The one-way function is used herein in order to prevent restoration from information after the conversion, and the one-way function to be used herein can be a keyed hash function based on the hash function recommended by national and international evaluation projects and evaluation organizations, for example, as shown in Fig. 26.

When a process using the attribute information of a user of a mobile terminal is carried out, as shown in Fig. 26, the unidentifiability securing unit 30 performs the unidentifiability securing process including the conversion into irreversible code by the one-way function, on an individual-identifiable number (e.g., a phone number) in the attribute information, prior to the process. Furthermore, the unidentifiability securing unit 30 may delete name information in the attribute information, replace date-of-birth information with age information, and replace address information with numbered subdivision address information excluding street number information.

Since the unidentifiability securing process by the unidentifiability securing unit 30 as described above can remove the information with individual identifiability from the location data and the attribute information, it can prevent such trouble that an individual is identified from the location data or the attribute information.

The eighth embodiment described the unidentifiability securing process, based on the sixth embodiment, but the eighth embodiment is also applicable to the seventh embodiment to perform the conversion process as in the sixth embodiment. The unidentifiability securing process described in the eighth embodiment can also be applied to the aforementioned first to fifth embodiments without the conversion process.

[Ninth embodiment]

The ninth embodiment will describe an embodiment wherein a certain estimated value (a person-antry-count, a terminal-entry-count, the number of entering persons, the number of leaving persons, the number of out/in persons, or the like) is output after execution of a concealment process on an estimated value on the basis of a predetermined reference.

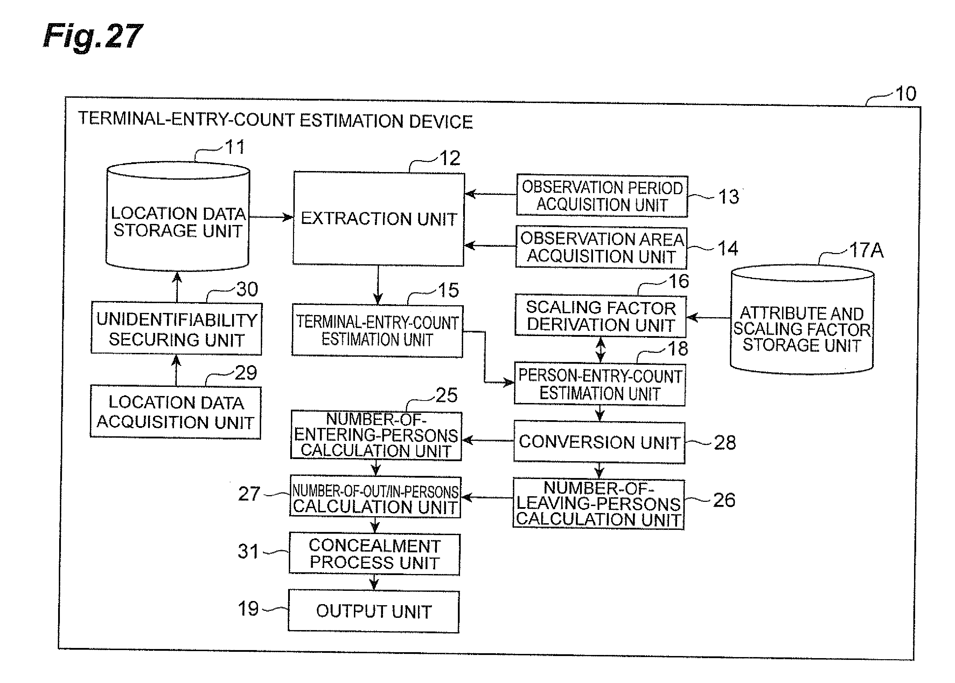

As shown in Fig. 27, the function block configuration of the terminal-entry-count estimation device 10 in the ninth embodiment is a configuration wherein a concealment process unit 31 to perform the concealment process is added between the number-of-out/in-persons calculation unit 27 and the output unit 19 in the function block configuration of the terminal-entry-count estimation device in the eighth embodiment (Fig. 25).

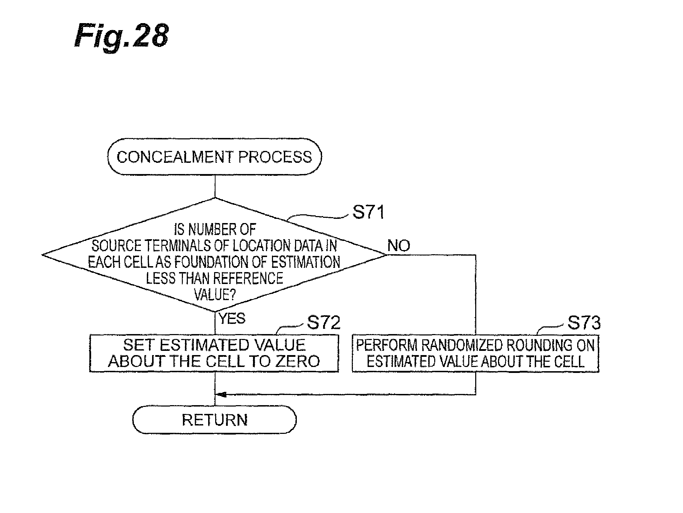

The concealment process unit 31 performs, for example, the concealment process shown in Fig. 28, when receiving an estimated value obtained in the estimation (a person-entry-count, a terminal-entry-count, the number of entering persons, the number of leaving persons, the number of out/in persons, or the like), from the number-of-out/in-persons calculation unit 27. Namely, the concealment process unit 31 determines whether or not the number of source terminals indicative of from how may terminals the location data in each area (cell) as a basis of the estimation is acquired, is less than a predetermined reference value ("10" as an example) for a determination on necessity of the concealment process (step S71 in Fig. 28). The number of source terminals indicates a unique entry count of terminals without redundancy of identical terminal. Execution of the determination herein requires the number of source terminals of the location data in each area (cell), and an example thereof is as follows: in estimating the terminal-entry-count by counting the number of extracted pieces of location data, the terminal-entry-count estimation unit 15 counts the number of pieces of identification information (e.g., hashed phone numbers after the aforementioned unidentifiability securing process by the unidentifiability securing unit 30) in the location data and transmits information of the total count of hashed phone numbers thus obtained, to the concealment process unit 31; the concealment process unit 31 may use the total count of hashed phone numbers as the number of source terminals of the location data in each area (cell). For transmitting the information of the total count of hashed phone numbers to the concealment process unit 31, each of the process units (person-entry-count estimation unit 18 and others) located between the terminal-entry-count estimation unit 15 and the concealment process unit 31 transmits the information of the total count of hashed phone numbers to the subsequent process unit.

If in step S71 the number of source terminals of the location data in each area (cell) as a basis of the estimation is less than the reference value, the concealment process unit 31 sets the estimated value about the area (cell) to zero, thereby concealing the estimated value (step S72). The concealment method herein is not limited to setting the estimated value to zero, but another method may be adopted, for example, such as a method of expressing the estimated value by a predetermined letter or mark (e.g., "X" or the like).

On the other hand, when it is determined in step S71 that the number of source terminals of the location data in each area (cell) as a basis of the estimation is not less than the reference value, the concealment process unit 31 performs randomized rounding of a class interval used in output of estimated value, which is described below, on the estimated value about the area (cell) (step S73). Namely, let x be the estimated value about a given area (cell) and k be the class interval; then, when $kn \leq x < k(n+1)$ (n is an integer), the concealment process unit 31 rounds the estimated value x to $k(n+1)$ with a probability of $(x-kn)/k$ and to $kn$ with a probability of $(k(n+1)-x)/k$.

For example, in a case where the estimated value x is 23 and where the class interval k is 10, $k \times 2 \leq x < k(2+1)$ and thus $n = 2$; the estimated value "23" is rounded to "30" with the probability of 0.3 (probability of 30%) and to "20" with the probability of 0.7 (probability of 70%).

The concealment process by the concealment process unit 31 as described above can prevent an individual from being identified from the estimation result and enhance availability of the estimation result. It can also prevent such trouble that the concealed value can be speculated from other values.

The class interval in the randomized rounding may be determined as follows: the location data with a maximum scaling factor is extracted from the location data used in totalization; the scaling factor is multiplied by a predetermined number (e.g., "10"); the result of the multiplication is set as the class interval. It is also possible to preliminarily determine the class interval and perform the randomized rounding therewith. On that occasion, it is possible to adopt a process rule of discarding data of an area (cell) including the location data of which the scaling factor exceeds a predetermined ratio (e.g., "1/10") of the predetermined class interval.

The concealment process by the concealment process unit 31 does not have to be limited only to the process shown in Fig. 28, but another process may also be adopted. For example, in step S71 in Fig. 28, a determination may be made on whether "the count of pieces of location data in each area (cell) as a basis of the estimation" is less than a reference value or on whether "an output estimated value (population or the number of terminals)" is less than a reference value, instead of "the number of source terminals of the location data in each area (cell) as a basis of the estimation". When the determination in step S71 in Fig. 28 is negative, the process in step S73 may be omitted.

The ninth embodiment described the concealment process based on the eighth embodiment (the form to perform the unidentifiability securing process), but it can also be applied to the first to seventh embodiments without execution of the unidentifiability securing process.

Now, let us describe the population estimation units and, the output units and output forms associated with the output in the aforementioned various embodiments, below.

The population estimation units can be set according to at least one of attributes (ages, genders, addresses, or the like) of users, time zones, and places (sectors, meshes, or the like). For example, when the population estimation units are time zones of one-hour intervals every day, the extraction unit 12 shown in Fig. 15 specifies to which time zone each piece of location data corresponds, based on the acquisition time information included in each piece of location data, extracts the location data for each of the time zones of one-hour intervals, and transmits the extracted data to the terminal-entry-count estimation unit 15. Then the terminal-entry-count estimation unit 15 counts the number of pieces of location data in each of the time zones of one-hour intervals to estimate terminal-entry-counts in the respective time zones of one-hour intervals, and transmits the result to the person-entry-count estimation unit 18. The person-entry-count estimation unit 18 acquires the scaling factors for the respective population estimation units (or for the respective time zones of one-hour intervals) from the scaling factor derivation unit 16 and multiplies the terminal-entry-counts by the corresponding scaling factors in the same time zones of one-hour intervals to obtain person-entry-counts in the respective time zones of one-hour intervals. When the time zones are set as population estimation units, they may be set as discontinuous time zones along a temporal sequence (e.g., time zones from 13:00 to 14:00 every day, time zones from 10:00 to 11:00 on Saturday and Sunday every week, and so on).

On the other hand, the output units associated with the output can also be set, in the same manner as the estimation process units, according to at least one of the attributes (ages, genders, addresses, or the like) of users, the time zones, and the places (sectors, meshes, or the like).

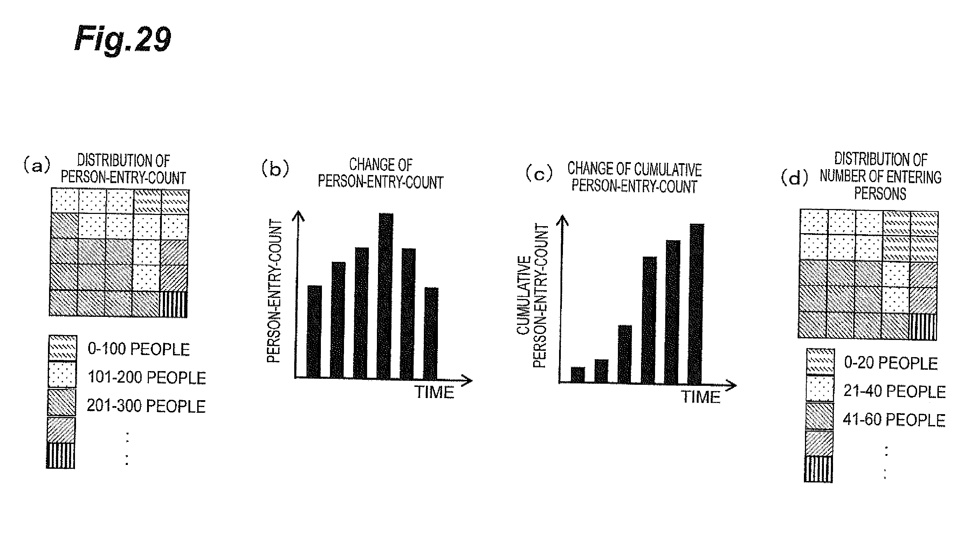

An output form associated with the output can be selected from a variety of output forms, for example, such as a drawing showing a person-entry-count distribution shown in Fig. 29 (a), a drawing showing a chronological person-entry-count change shown in Fig. 29 (b), and a drawing showing a chronological change of cumulative person-entry-count (i.e., cumulative sum of person-entry-count) shown in Fig. 29 (c). Of course, the above output forms do not have to be limited to the person-entry-count, but can also be applied to various estimated values such as the number of entering persons, number of leaving persons, number of out/in persons, terminal-entry-count, number of entering terminals, number of leaving terminals, and number of out/in terminals. A distribution diagram about numbers of entering persons may be output, for example, as shown in Fig. 29 (d). Furthermore, concerning each of the estimated values, the output may be provided for each one or a combination of two or more out of the user attributes (ages, genders, addresses, or the like), the time zones, and the places (sectors, meshes, or the like).

Next, a modification example about the feature amount will be described. The aforementioned first and second embodiments showed the examples in which the time difference between the preceding and following location data (the time difference between the second location data and the third location data) before and after the location data as a target for calculation of the feature amount (the first location data) was calculated as the feature amount on the first location data. Expressing this by an equation, the feature amount can be expressed by Equation (8) below. The below equation (8) is a modification of the aforementioned equation (4) and is equivalent to Equation (4) (namely, there is no change in the conception of Equation (4)).

$$w_{ij} = u_{i(j+1)} - u_{i(j-1)} \qquad (8)$$

The present modification example shows another variation of the calculation method of the feature amount calculated in the feature amount calculation unit 24C.

In the present modification example, when the feature amount calculation unit 20C calculates the feature amount on the first location data, it takes account of type information (e.g., a below-described generation factor (generation timing) of location data) on the second location data and the third location data. Specifically, the feature amount calculation unit 20C calculates a value of a multiplication of the time difference between the third location data and the first location data by a correction factor $\alpha$ corresponding to the type information of the third location data (generation factor) and calculates a value of a multiplication of the time difference between the first location data and the second location data by a correction factor $\beta$ corresponding to the type information of the second location data (generation factor). However, instead of the above factors, the feature amount calculation unit 20C may determine the correction factor $\alpha$ or $\beta$ according to the type information of the first location data or may determine the correction factor $\beta$ according to the type information of the first and second location data and determine the correction factor $\alpha$ according to the type information of the first and third location data. Then the feature amount calculation unit 20C defines a value obtained by adding the results of these multiplications, as the feature amount on the first location data. When the feature amount calculation process in the feature amount calculation unit 20C is expressed by an equation, it is represented by Equation (9) below.

$$w_{ij} = \alpha(u_{i(j+1)} - u_{ij}) + \beta(u_{ij} - u_{i(j-1)}) \qquad (9)$$

For example, when the location data is the location registration information, the type information about the second location data and the third location data can be information about the generation factor of the location registration information, and this information about the generation factor is included in the generated location registration information. Examples of such generation factors of location registration information include a crossing of a terminal across a boundary of a location registration area, generation based on location registration performed at periodic intervals, execution of an attachment process by a power-on operation of a terminal or the like, execution of a detachment process by a power-off operation of a terminal or the like, and so on, and set values of the correction factors $\alpha$ and $\beta$ are preliminarily defined corresponding to these generation factors. Then the feature amount calculation unit 20C can set the correction factor $\alpha$ on the third location data in accordance with the information about the generation factor of the third location data and set the correction factor $\beta$ on the second location data in accordance with the information about the generation factor of the second location data. The correction factors $\alpha$, $\beta$ both may be preliminarily determined as values of not less than 0 and not more than 2. However, this numerical range is not essential.

For example, in the case of the location registration information of which the generation timing is irrespective of the location of the terminal like the location registration information based on location registrations performed at periodic intervals, expectations of time when the terminal has been located in a current sector are considered to be the same before and after generation of the location registration information. On the other hand, when the location registration information is one generated because of a crossing of a terminal across a location area boundary, it can be determined that the terminal does not have been located in the current sector yet, at least before generation of the location registration information. For this reason, a duration in which the terminal has been located in the current sector before generation of the location registration information can be considered to be 0, and when the type information (generation factor) of the first location data is "a crossing across a location area boundary", the correction factor $\beta$ in above Equation (9) (i.e., the correction factor $\beta$ about the time difference from the immediately-preceding location data) can be set to 0. This allows the device to calculate the feature amount better agreeing with the actual condition.

As described above, when the feature amount calculation unit 20C calculates the feature amount on the target location data (first location data), it corrects the time differences from the second location data and from the third location data in accordance with the type information on the second and third location data (generation factors of the location data as an example) being the preceding and following location data before and after the first location data, and calculates the feature amount using the corrected time differences. This allows the device to calculate the feature amount more accurately, based on the type information of the location data.

**List of Reference Signs**

1: communication system; 10: terminal-entry-count estimation device; 11: location data storage unit; 12: extraction unit; 13: observation period acquisition unit; 14: observation area acquisition unit; 15: terminal-entry-count estimation unit; 16: scaling factor derivation unit; 17: attribute data storage unit; 17A: attribute and scaling factor storage unit; 18: person-entry-count estimation unit; 19: output unit; 20: total-terminal-entry-count estimation unit; 20A: observation target acquisition unit; 20B: preceding and following location data acquisition unit; 20C: feature amount calculation unit; 20D: feature amount totalization unit; 21: average-visit-duration calculation unit; 22: number-of-entering-terminals calculation unit; 23: number-of-leaving-terminals calculation unit; 24: number-of-out/in-terminals calculation unit; 25: number-of-entering-persons calculation unit; 26: number-of-leaving-persons calculation unit; 27: number-of-out/in-persons calculation unit; 28: conversion unit; 29: location data acquisition unit; 30: unidentifiability securing unit; 31: concealment process unit; 100: mobile terminal; 200: BTS; 300: RNC; 400: exchange; 500: management center; 501: social sensor unit; 502: peta-mining unit; 503: mobile demography unit; 504: visualization solution unit; 700: various processing node.

**Claims**

1. A terminal-entry-count estimation device comprising:

   an extraction unit for extracting a terminal estimated to be located in an observation area during at least a part of an observation period, or a piece of location data generated by the terminal within the observation period or within an extended period extended by a predetermined width from the observation period, based on location data which includes identification information to identify each terminal, location information about a location of the terminal, and acquisition time information when the location information is acquired and of which an acquisition time is within the observation period or within the extended period; and
   a terminal-entry-count estimation unit for estimating a terminal-entry-count in the observation area during the observation period, based on the number of extracted location data or the number of extracted terminals.

2. The terminal-entry-count estimation device according to claim 1, wherein the extraction unit operates as follows:

   the extraction unit calculates, for each terminal, an estimated visit duration of a visit of the terminal in the observation area, based on in-area location data of which the acquisition time is within the extended period and of which the location information indicates a location in the observation area, and out-of-area location data which is adjacent to the in-area location data in a chronological arrangement in an order of acquisition times and of which the location information indicates a location out of the observation area, among location data about the same terminal; and
   the extraction unit extracts a terminal of which the calculated estimated visit duration overlaps the observation period.

3. The terminal-entry-count estimation device according to claim 2, wherein the extraction unit operates as follows:

   the extraction unit calculates, as the estimated visit duration, a period of which a start time is a time corresponding to a proportional division point between an acquisition time of a leading piece of in-area location data in the chronological arrangement and an acquisition time of a piece of out-of-area location data adjacent to the leading piece of in-area location data, and of which an end time is a time corresponding to a proportional division point between an acquisition time of a last piece of in-area location data in the chronological arrangement and an acquisition time of a piece of out-of-area location data adjacent to the last piece of in-area location data.

4. The terminal-entry-count estimation device according to claim 1, wherein the extraction unit operates as follows:

the extraction unit extracts location data with an earliest acquisition time out of the location data of which the acquisition time is within the observation period and of which the location information indicates a location in the observation area, among the location data about the same terminal.

5. A terminal-entry-count estimation device comprising:

an extraction unit for extracting a piece of location data per terminal of which location information indicates a location in an observation area and of which an acquisition time is within an observation period, or a terminal corresponding to the location data, based on location data which includes identification information to identify each terminal, location information about a location of the terminal, and acquisition time information when the location information is acquired and of which an acquisition time is within the observation period or within an extended period extended by a predetermined width from the observation period; and
a terminal-entry-count estimation unit for estimating a terminal-entry-count in the observation area during the observation period, based on the number of extracted location data or the number of extracted terminals.

6. The terminal-entry-count estimation device according to any one of claims 1 to 5, further comprising:

a total-terminal-entry-count estimation unit for estimating a total-terminal-entry-count that is a cumulative sum along a time axis about the terminal-entry-count in the observation area during the observation period, based on location data of which the acquisition time is within the extended period; and
a first-average-visit-duration calculation unit for calculating an average visit duration in the observation area during the observation period, based on the total-terminal-entry-count and the terminal-entry-count in the observation area during the observation period, obtained by estimation.

7. The terminal-entry-count estimation device according to claim 6, wherein the total-terminal-entry-count estimation unit includes:

a preceding and following location data acquisition unit for, concerning a piece of target location data, acquiring location acquisition time information of location data immediately preceding the target location data, and location acquisition time information of location data immediately following the target location data, from location data including the same identification information as that of the target location data;
a feature amount calculation unit for calculating a feature amount on the target location data, based on at least two of the location acquisition time information of the immediately-preceding location data, the location acquisition time information of the target location data, and the location acquisition time information of the immediately-following location data;
an observation target acquisition unit for acquiring, as observation target location data, one or more pieces of location data including location acquisition time information after an observation start time and before an observation end time about the observation period, and including location information associated with observation area information about the observation area; and
a feature amount totalization unit for totalizing feature amounts on the observation target location data among the location data and estimating the total-terminal-entry-count in the observation area during the observation period, based on a total value of the feature amounts obtained.

8. The terminal-entry-count estimation device according to any one of claims 1 to 7, further comprising at least one of:

a number-of-entering-terminals calculation unit for calculating a difference between respective terminal-entry-counts in the observation area in a first observation period and in a second observation period with the same start time, as the number of entering terminals into the observation area in a period between an end time of the first observation period and an end time of the second observation period; and
a number-of-leaving-terminals calculation unit for calculating a difference between respective terminal-entry-counts in the observation area in a third observation period and in a fourth observation period with the same end time, as the number of leaving terminals from the observation area in a period between a start time of the third observation period and a start time of the fourth observation period.

9. The terminal-entry-count estimation device according to claim 8,
wherein, when the terminal-entry-count estimation device comprises both of the number-of-entering-terminals calculation unit and the number-of-leaving-terminals calculation unit, the terminal-entry-count estimation device further comprises a number-of-out/in-terminals calculation unit for calculating a difference obtained by subtracting the number of leaving terminals from the number of entering terminals in the same period, as the number of out/in terminals.

**10.** The terminal-entry-count estimation device according to any one of claims 1 to 9, further comprising:

a scaling factor derivation unit for deriving a scaling factor for converting a terminal-entry-count into a person-entry-count; and

a person-entry-count estimation unit for estimating a person-entry-count in the observation area during the observation period, based on the scaling factor and the terminal-entry-count in the observation area during the observation period.

**11.** The terminal-entry-count estimation device according to claim 10, further comprising:

a second-average-visit-duration calculation unit for acquiring a total population that is a cumulative sum along a time axis about a population in the observation area during the observation period, based on a demographic change in the observation area during the observation period, and calculating an average visit duration in the observation area during the observation period, based on the total population and the person-entry-count estimated by the person-entry-count estimation unit.

**12.** The terminal-entry-count estimation device according to claim 10 or 11, further comprising at least one of:

a number-of-entering-persons calculation unit for calculating a difference between respective person-entry-counts in the observation area in a fifth observation period and in a sixth observation period with the same start time, as the number of entering persons into the observation area in a period between an end time of the fifth observation period and an end time of the sixth observation period; and

a number-of-leaving-persons calculation unit for calculating a difference between respective person-entry-counts in the observation area in a seventh observation period and in an eighth observation period with the same end time, as the number of leaving persons from the observation area in a period between a start time of the seventh observation period and a start time of the eighth observation period.

**13.** The terminal-entry-count estimation device according to claim 10 or 11, further comprising at least one of:

a number-of-entering-persons calculation unit for calculating a difference between respective terminal-entry-counts in the observation area in a ninth observation period and in a tenth observation period with the same start time, as the number of entering terminals into the observation area in a period between an end time of the ninth observation period and an end time of the tenth observation period, and calculating the number of entering persons into the observation area in the period between the end time of the ninth observation period and the end time of the tenth observation period, based on the scaling factor and the calculated number of entering terminals; and

a number-of-leaving-persons calculation unit for calculating a difference between respective terminal-entry-counts in the observation area in an eleventh observation period and a twelfth observation period with the same end time, as the number of leaving terminals from the observation area in a period between a start time of the eleventh observation period and a start time of the twelfth observation period, and calculating the number of leaving persons from the observation area in the period between the start time of the eleventh observation period and the start time of the twelfth observation period, based on the scaling factor and the calculated number of leaving terminals.

**14.** The terminal-entry-count estimation device according to claim 12 or 13, wherein, when the terminal-entry-count estimation device comprises both of the number-of-entering-persons calculation unit and the number-of-leaving-persons calculation unit, the terminal-entry-count estimation device further comprises a number-of-out/in-persons calculation unit for calculating a difference obtained by subtracting the number of leaving persons from the number of entering persons, as the number of out/in persons.

**15.** The terminal-entry-count estimation device according to any one of claims 1 to 14, the terminal-entry-count estimation device further comprising:

a conversion unit for converting estimated values in respective observation areas obtained in estimation by the terminal-entry-count estimation unit or by the person-entry-count estimation unit, into estimated values in respective output units different from the observation areas, based on area ratios of overlap regions between the output units and the observation areas to the observation areas.

16. The terminal-entry-count estimation device according to claim 15, wherein the conversion unit operates as follows:

when there are at least two communication areas out of a communication area of an indoor station and communication areas of a plurality of outdoor stations using respective frequency bands with different coverage areas, overlapping in a geographically identical observation area, the conversion unit performs conversion into the estimated values in the respective output units based on the area ratios for each of the overlapping communication areas and addition of the estimated values after the conversion for each of the communication areas, thereby obtaining the estimated values in the respective output units.

17. The terminal-entry-count estimation device according to any one of claims 1 to 16, wherein the person-entry-count estimation unit estimates person-entry-counts in respective output units and in respective population estimation units, based on terminal-entry-counts obtained in estimation, scaling factors for conversion of the terminal-entry-counts into person-entry-counts, and area ratios of overlap regions between the output units different from observation areas, and the observation areas to the observation areas.

18. The terminal-entry-count estimation device according to any one of claims 1 to 17, further comprising:

an output device for outputting the estimated value obtained.

19. The terminal-entry-count estimation device according to claim 18,
wherein an output mode by the output device to be employed is allowed to be at least one of a drawing showing respective distributions of a person-entry-count, the number of entering persons, the number of leaving persons, and the number of out/in persons and a drawing showing chronological changes thereof, and a drawing showing a chronological change of a cumulative sum of person-entry-count; and
wherein an output unit by the output device is allowed to be set according to at least one of an attribute of a user of a mobile terminal, a time zone, and a place.

20. The terminal-entry-count estimation device according to any one of claims 1 to 19, the terminal-entry-count estimation device further comprising:

a location data acquisition unit for acquiring the location data including the identification information to identify each terminal, the location information about the location of the terminal, and the acquisition time information when the location information is acquired;
and
an unidentifiability securing unit for performing an unidentifiability securing process including a conversion into irreversible code by a one-way function on the identification information included in the location data acquired by the location data acquisition unit,
wherein the unidentifiability securing unit operates as follows:

when a process using attribute information of a user of a terminal is carried out, prior to the process, the unidentifiability securing unit performs the unidentifiability securing process on the attribute information.

21. The terminal-entry-count estimation device according to any one of claims 1 to 20, the terminal-entry-count estimation device further comprising:

a concealment process unit for, before the estimated value obtained is output, performing a concealment process on the estimated value on the basis of a predetermined reference.

22. The terminal-count estimation device according to claim 21,
wherein the concealment process unit operates as follows:

the concealment process unit determines whether or not the number of source terminals indicative of from how many terminals the location data in each area as a basis of estimation of the terminal-entry-count was acquired, is less than a reference value for a determination on whether or not the concealment process is needed, and wherein when the number of source terminals of the location data in a given area is less than the reference value, the concealment process unit conceals the estimated value about the area.

23. The terminal-entry-count estimation device according to claim 22, wherein the concealment process unit operates as follows:

when the number of source terminals of the location data in a given area is not less than the reference value, the concealment process unit rounds the estimated value on the area, based on an upper limit value and a lower limit value of a class to which the estimated value on the area belongs out of a plurality of classes used in output of the estimated value, a class interval, and the estimated value, to the upper limit value and the lower limit value with respective probability values according to a difference from the upper limit value and a difference from the lower limit value.

24. The terminal-entry-count estimation device according to any one of claims 1 to 23, further comprising:

an observation period acquisition unit for acquiring observation period information including a set of an observation start time and an observation end time; and
an observation area acquisition unit for acquiring observation area information associated with one or more pieces of location information.

25. A terminal-entry-count estimation method executed by a terminal-entry-count estimation device, comprising:

an extraction step of extracting a terminal estimated to be located in an observation area during at least a part of an observation period, or a piece of location data generated by the terminal within the observation period or within an extended period extended by a predetermined width from the observation period, based on location data which includes identification information to identify each terminal, location information about a location of the terminal, and acquisition time information when the location information is acquired and of which an acquisition time is within the observation period or within the extended period; and
a terminal-entry-count estimation step of estimating a terminal-entry-count in the observation area during the observation period, based on the number of extracted location data or the number of extracted terminals.

26. A terminal-entry-count estimation method executed by a terminal-entry-count estimation device, comprising:

an extraction step of extracting a piece of location data per terminal of which location information indicates a location in an observation area and of which an acquisition time is within an observation period, or a terminal corresponding to the location data, based on location data which includes identification information to identify each terminal, location information about a location of the terminal, and acquisition time information when the location information is acquired and of which an acquisition time is within the observation period or within an extended period extended by a predetermined width from the observation period; and
a terminal-entry-count estimation step of estimating a terminal-entry-count in the observation area during the observation period, based on the number of extracted location data or the number of extracted terminals.

# *Fig.1*

1

VISUALIZATION
SOLUTION
UNIT — 504

MOBILE
DEMOGRAPHY — 503
UNIT

500

PETA-MINING
UNIT — 502

SOCIAL SENSOR UNIT — 501

VARIOUS
PROCESSING NODE     VARIOUS
PROCESSING NODE } 700

EXCHANGE   EXCHANGE   EXCHANGE } 400

RNC   RNC   RNC   RNC   RNC   RNC } 300

BTS BTS BTS BTS BTS BTS BTS BTS BTS BTS BTS } 200

} 100

*Fig.2*

EP 2 672 434 A1

# Fig.3

```
        ( START )
            |
┌ ─ ─ ─ ─ ─│─ ─ ─ ─ ─ ─ ─ ─ ─ ─ ─ ─ ─ ─ ─ ─ ┐
|  ┌──────────────────────┐                    |
|  │   CALCULATION OF      │── S1               |
|  │ ESTIMATED VISIT DURATION │                 |
|  └──────────────────────┘                    |
|            |                    EXTRACTION BY |
|  ┌──────────────────────┐      EXTRACTION UNIT|
|  │EXTRACTION OF TERMINAL WHOSE│                |
|  │  ESTIMATED VISIT DURATION  │── S2           |
|  │OVERLAPS OBSERVATION PERIOD │                |
|  └──────────────────────┘                    |
└ ─ ─ ─ ─ ─│─ ─ ─ ─ ─ ─ ─ ─ ─ ─ ─ ─ ─ ─ ─ ─ ┘
            |
   ┌──────────────────────────┐
   │ESTIMATION OF TERMINAL-ENTRY-COUNT│── S3
   └──────────────────────────┘
            |
   ┌──────────────────────────┐
   │ DERIVATION OF SCALING FACTOR │── S4
   └──────────────────────────┘
            |
   ┌──────────────────────────┐
   │ESTIMATION OF PERSON-ENTRY-COUNT│── S5
   └──────────────────────────┘
            |
   ┌──────────────────────────┐
   │OUTPUT OF TERMINAL-ENTRY-COUNT│── S6
   │   OR PERSON-ENTRY-COUNT   │
   └──────────────────────────┘
            |
         ( END )
```

# Fig.4

ESTIMATED VISIT DURATION

tx

tin  ta  tb  tc  ty

tout

Fig.5

TERMINAL A

TERMINAL B

TERMINAL C

TERMINAL D

TERMINAL E

TIME $t_0$

TIME $t_1$

EP 2 672 434 A1

*Fig.6*

TERMINAL-ENTRY-COUNT ESTIMATION DEVICE (10)

- 11 LOCATION DATA STORAGE UNIT
- 12 EXTRACTION UNIT
- 13 OBSERVATION PERIOD ACQUISITION UNIT
- 14 OBSERVATION AREA ACQUISITION UNIT
- 15 TERMINAL-ENTRY-COUNT ESTIMATION UNIT
- 20 TOTAL-TERMINAL-ENTRY-COUNT ESTIMATION UNIT
- 20A OBSERVATION TARGET ACQUISITION UNIT
- 20B PRECEDING AND FOLLOWING LOCATION DATA ACQUISITION UNIT
- 20C FEATURE AMOUNT CALCULATION UNIT
- 20D FEATURE AMOUNT TOTALIZATION UNIT
- 21 AVERAGE-VISIT-DURATION CALCULATION UNIT
- 19 OUTPUT UNIT

# Fig.7

```
        ┌─────────────┐
        │    START    │
        └──────┬──────┘
 ┌─────────────┼──────────────────────────────────┐
 │   ┌──────────────────────────┐                  │
 │   │      CALCULATION OF       │                 │
 │   │  ESTIMATED VISIT DURATION │──S1             │
 │   └──────────────────────────┘                  │
 │                 │                    EXTRACTION BY │
 │   ┌──────────────────────────┐    EXTRACTION UNIT │
 │   │ EXTRACTION OF TERMINAL WHOSE │               │
 │   │   ESTIMATED VISIT DURATION │──S2            │
 │   │ OVERLAPS OBSERVATION PERIOD │                │
 │   └──────────────────────────┘                  │
 └─────────────────┼────────────────────────────────┘
     ┌──────────────────────────────┐
     │ ESTIMATION OF TERMINAL-ENTRY-COUNT │──S3
     └──────────────────────────────┘
                   │
     ┌──────────────────────────────┐
     │         ESTIMATION OF          │
     │  TOTAL-TERMINAL-ENTRY-COUNT    │──S4A
     └──────────────────────────────┘
                   │
     ┌──────────────────────────────┐
     │ CALCULATION OF AVERAGE VISIT DURATION │──S5A
     └──────────────────────────────┘
                   │
     ┌──────────────────────────────┐
     │ OUTPUT OF AVERAGE VISIT DURATION │──S6A
     └──────────────────────────────┘
                   │
        ┌─────────────┐
        │     END     │
        └─────────────┘
```

# Fig.8

```
    ╭─────────────────────────────────╮
    │  TOTAL-TERMINAL-ENTRY-COUNT     │
    │     ESTIMATION PROCESS          │
    ╰─────────────────────────────────╯
                    │
    ┌─────────────────────────────────┐
    │   ACQUISITION OF OBSERVATION     │ ─ S21
    │     TARGET LOCATION DATA         │
    └─────────────────────────────────┘
                    │
                    │ ◄──────────────────────┐
    ┌─────────────────────────────────┐      │
    │ ACQUISITION OF IMMEDIATELY-PRECEDING AND │
    │ IMMEDIATELY-FOLLOWING LOCATION DATA AS   │ ─ S22
    │ TO AN OBSERVATION TARGET LOCATION DATA   │
    └─────────────────────────────────┘      │
                    │                         │
    ┌─┬─────────────────────────────┬─┐      │
    │ │ CALCULATION OF FEATURE AMOUNT│ │ ─ S23 │
    └─┴─────────────────────────────┴─┘      │
                    │              S24        │
                   ╱ ╲                        │
                  ╱   ╲  IS PROCESSING        │
                 ╱ COMPLETED FOR ALL PIECES OF╲  NO │
                ╱  OBSERVATION TARGET LOCATION ╲───┘
                ╲         DATA?               ╱
                 ╲                           ╱
                  ╲                         ╱
                   ╲        │ YES          ╱
    ┌─────────────────────────────────┐
    │ ESTIMATION OF TOTAL-TERMINAL-ENTRY-COUNT │ ─ S25
    │   BASED ON SUM OF FEATURE AMOUNTS │
    └─────────────────────────────────┘
                    │
            ╭───────────────╮
            │    RETURN      │
            ╰───────────────╯
```

# Fig.9

```
      ╭─────────────────────────╮
      │  CALCULATION PROCESS OF  │
      │     FEATURE AMOUNT       │
      ╰─────────────────────────╯
                   │
┌──────────────────────────────────────────────────┐
│  CALCULATION OF DIFFERENCE Da BETWEEN LOCATION     │
│ ACQUISITION TIMES OF FIRST AND SECOND LOCATION DATA├── S31
│       AND DIFFERENCE Db BETWEEN LOCATION            │
│  ACQUISITION TIMES OF FIRST AND THIRD LOCATION DATA │
└──────────────────────────────────────────────────┘
                   │
                 ╱   ╲  ── S32
               ╱       ╲
             ╱  DIFFERENCE Da >  ╲    NO
             ╲  REFERENCE VALUE A? ╱ ─────────┐
               ╲       ╱                       │
                 ╲   ╱                         │
                   │ YES                       │
┌──────────────────────────────────────────┐  │
│ DEFINE TIME SET BACKWARD BY PREDETERMINED  │  │
│     TIME FROM LOCATION ACQUISITION TIME OF ├── S33
│       FIRST LOCATION DATA, AS LOCATION     │  │
│   ACQUISITION TIME OF SECOND LOCATION DATA │  │
└──────────────────────────────────────────┘  │
                   │◄─────────────────────────┘
                 ╱   ╲  ── S34
               ╱       ╲
             ╱  DIFFERENCE Db >  ╲    NO
             ╲  REFERENCE VALUE B? ╱ ─────────┐
               ╲       ╱                       │
                 ╲   ╱                         │
                   │ YES                       │
┌──────────────────────────────────────────┐  │
│ DEFINE TIME SET FORWARD BY PREDETERMINED   │  │
│     TIME FROM LOCATION ACQUISITION TIME    ├── S35
│       OF FIRST LOCATION DATA, AS LOCATION  │  │
│   ACQUISITION TIME OF THIRD LOCATION DATA  │  │
└──────────────────────────────────────────┘  │
                   │◄─────────────────────────┘
┌──────────────────────────────────────────────────┐
│    CALCULATION OF DIFFERENCE BETWEEN LOCATION       │
│ ACQUISITION TIMES OF SECOND AND THIRD LOCATION DATA,├── S36
│       AS FEATURE AMOUNT ON FIRST LOCATION DATA      │
└──────────────────────────────────────────────────┘
                   │
             ╭──────────╮
             │  RETURN   │
             ╰──────────╯
```

## Fig.10

MODEL

$a_5$

SECTOR S

$a_2$

$a_2$

$a_1$

$a_4$

NUMBER OF SIGNALS ($x_i$)
FROM TERMINAL $a_i$
OBSERVED IN AREA S
DURING OBSERVATION PERIOD

OBSERVATION
PERIOD (T)

TERMINAL $a_i$

$q_{i0}$    $q_{i1}$    $q_{i2}$    $q_{i3}$    $q_{i4}$

t

VISIT DURATION OF
TERMINAL $a_i$ IN AREA S

VISIT DURATION OF TERMINAL $a_i$ IN AREA S DURING OBSERVATION PERIOD

SUM OF THEM CORRESPONDS TO TOTAL-TERMINAL-ENTRY-COUNT

# Fig.11

OBSERVATION PERIOD (T)

$w_{i1}/2$  $w_{i2}/2$, $w_{i3}/2$

$q_{i0}$  $q_{i1}$  $q_{i2}$  $q_{i3}$  $q_{i4}$

TERMINAL $a_i$

VISIT DURATION OF TERMINAL $a_i$ IN AREA S

ESTIMATED VALUE OF VISIT DURATION $L_i$

t

**Fig.12**

EP 2 672 434 A1

## Fig.13

```
                    ┌─────────────┐
                    │    START    │
                    └──────┬──────┘
                           │
     ┌─────────────────────▼──────────────────────────┐
     │  EXTRACTION OF ONE PIECE OF LOCATION DATA       │
     │          FROM IN-AREA LOCATION DATA             │───S41
     │  WITH ACQUISITION TIME IN OBSERVATION PERIOD    │
     │      AMONG LOCATION DATA OF SAME TERMINAL        │
     └────────────────────┬───────────────────────────┘
                          │
     ┌────────────────────▼───────────────────────────┐
     │   ESTIMATION OF TERMINAL-ENTRY-COUNT            │───S42
     └────────────────────┬───────────────────────────┘
                          │
                        ◇ S43
              IS ESTIMATION
       COMPLETED FOR OBSERVATION PERIODS
  NO  NECESSARY FOR CALCULATION OF NUMBER OF
      ENTERING TERMINALS OR NUMBER OF
              LEAVING TERMINALS?
                          │ YES
     ┌────────────────────▼───────────────────────────┐
     │ CALCULATION OF NUMBER OF ENTERING TERMINALS     │───S44
     │     AND NUMBER OF LEAVING TERMINALS             │
     └────────────────────┬───────────────────────────┘
                          │
     ┌────────────────────▼───────────────────────────┐
     │ CALCULATION OF NUMBER OF OUT/IN TERMINALS       │───S45
     └────────────────────┬───────────────────────────┘
                          │
     ┌────────────────────▼───────────────────────────┐
     │     OUTPUT OF CALCULATION RESULT                │───S46
     └────────────────────┬───────────────────────────┘
                          │
                    ┌─────▼───────┐
                    │     END     │
                    └─────────────┘
```

46

## Fig.14

TERMINAL A

TERMINAL B

TERMINAL C

TERMINAL D

TERMINAL E

TIME $t_0$  TIME $t_1$  TIME $t_2$

TERMINAL-ENTRY-COUNT BETWEEN $t_0$ AND $t_1$ = 4
TERMINAL-ENTRY-COUNT BETWEEN $t_1$ AND $t_2$ = 3
TERMINAL-ENTRY-COUNT BETWEEN $t_0$ AND $t_2$ = 5

NUMBER OF ENTERING TERMINALS BETWEEN TIMES $t_1$ AND $t_2$ : 5 - 4 = 1
NUMBER OF LEAVING TERMINALS BETWEEN TIMES $t_0$ AND $t_1$ : 5 - 3 = 2

## Fig.15

TERMINAL-ENTRY-COUNT ESTIMATION DEVICE — 10

LOCATION DATA STORAGE UNIT — 11

EXTRACTION UNIT — 12

OBSERVATION PERIOD ACQUISITION UNIT — 13

OBSERVATION AREA ACQUISITION UNIT — 14

TERMINAL-ENTRY-COUNT ESTIMATION UNIT — 15

SCALING FACTOR DERIVATION UNIT — 16

ATTRIBUTE AND SCALING FACTOR STORAGE UNIT — 17A

NUMBER-OF-ENTERING-PERSONS CALCULATION UNIT — 25

PERSON-ENTRY-COUNT ESTIMATION UNIT — 18

NUMBER-OF-OUT/IN-PERSONS CALCULATION UNIT — 27

NUMBER-OF-LEAVING-PERSONS CALCULATION UNIT — 26

OUTPUT UNIT — 19

# Fig.16

START

EXTRACTION OF ONE PIECE OF LOCATION DATA FROM IN-AREA LOCATION DATA WITH ACQUISITION TIME IN OBSERVATION PERIOD AMONG LOCATION DATA OF SAME TERMINAL — S51

ESTIMATION OF TERMINAL-ENTRY-COUNT IN EACH POPULATION ESTIMATION UNIT BY COUNTING NUMBER OF EXTRACTED PIECES OF LOCATION DATA IN EACH POPULATION ESTIMATION UNIT — S52

DERIVATION OF SCALING FACTOR FOR EACH POPULATION ESTIMATION UNIT — S53

ESTIMATION OF PERSON-ENTRY-COUNT IN EACH POPULATION ESTIMATION UNIT BY CALCULATING (TERMINAL-ENTRY-COUNT × SCALING FACTOR) IN EACH POPULATION ESTIMATION UNIT — S54

S55

IS ESTIMATION COMPLETED FOR OBSERVATION PERIODS NECESSARY FOR CALCULATION OF NUMBER OF ENTERING TERMINALS OR NUMBER OF LEAVING TERMINALS?

NO

YES

CALCULATION OF NUMBER OF ENTERING PERSONS AND NUMBER OF LEAVING PERSONS — S56

CALCULATION OF NUMBER OF OUT/IN PERSONS — S57

OUTPUT OF CALCULATION RESULT — S58

END

## Fig.17

| OBSERVATION AREA | OBSERVATION PERIOD | PERSON-ENTRY -COUNT | | | ENTERING POPULATION | | | LEAVING POPULATION | | | OUT/IN POPULATION | | |
|---|---|---|---|---|---|---|---|---|---|---|---|---|---|
| | | TOTAL | MEN | WOMEN | TOTAL | MEN | WOMEN | TOTAL | MEN | WOMEN | TOTAL | MEN | WOMEN |
| AREA A | ONE DAY IN A CERTAIN MONTH 12:00-13:00 | 1000 | 500 | 500 | 300 | 150 | 150 | 250 | 120 | 130 | +50 | +30 | +20 |
| ⋮ | | | | | | | | | | | | | |

EP 2 672 434 A1

# Fig.18

START

EXTRACTION OF ONE PIECE OF LOCATION DATA FROM IN-AREA LOCATION DATA WITH ACQUISITION TIME IN OBSERVATION PERIOD AMONG LOCATION DATA OF SAME TERMINAL ~S61

ESTIMATION OF TERMINAL-ENTRY-COUNT IN EACH POPULATION ESTIMATION UNIT BY COUNTING NUMBER OF EXTRACTED PIECES OF LOCATION DATA IN EACH POPULATION ESTIMATION UNIT ~S62

IS ESTIMATION COMPLETED FOR OBSERVATION PERIODS NECESSARY FOR CALCULATION OF NUMBER OF ENTERING TERMINALS OR NUMBER OF LEAVING TERMINALS? ~S63

NO

YES

CALCULATION OF NUMBER OF ENTERING TERMINALS AND NUMBER OF LEAVING TERMINALS IN EACH POPULATION ESTIMATION UNIT, AND DERIVATION OF SCALING FACTOR FOR EACH POPULATION ESTIMATION ~S64

CALCULATION OF NUMBER OF ENTERING PERSONS AND NUMBER OF LEAVING PERSONS, USING SCALING FACTOR IN EACH POPULATION ESTIMATION UNIT ~S65

CALCULATION OF NUMBER OF OUT/IN PERSONS ~S66

OUTPUT OF CALCULATION RESULT ~S67

END

# Fig.19

TERMINAL-ENTRY-COUNT ESTIMATION DEVICE — 10

- 11 LOCATION DATA STORAGE UNIT
- 12 EXTRACTION UNIT
- 13 OBSERVATION PERIOD ACQUISITION UNIT
- 14 OBSERVATION AREA ACQUISITION UNIT
- 15 TERMINAL-ENTRY-COUNT ESTIMATION UNIT
- 16 SCALING FACTOR DERIVATION UNIT
- 17A ATTRIBUTE AND SCALING FACTOR STORAGE UNIT
- 18 PERSON-ENTRY-COUNT ESTIMATION UNIT
- 25 NUMBER-OF-ENTERING-PERSONS CALCULATION UNIT
- 28 CONVERSION UNIT
- 27 NUMBER-OF-OUT/IN-PERSONS CALCULATION UNIT
- 26 NUMBER-OF-LEAVING-PERSONS CALCULATION UNIT
- 19 OUTPUT UNIT

EP 2 672 434 A1

Fig.20

(a)

(b)

(c)

## *Fig.21*

A-1: 10m² → 5%

A-2: 50m² → 25%

A-3: 100m² → 50%

A-4: 40m² → 20%

*Fig.22*

.

A-2: 25% → <u>200 PEOPLE</u>

B-1: 80% → <u>400 PEOPLE</u>

C-4: 80% → <u>600 PEOPLE</u>

200+400+600 = <u>1200 PEOPLE</u>

# Fig.23

| OPERATION FORMS | GEOGRAPHICAL RELATIONS BETWEEN TOTALIZATION UNITS AND OUTPUT UNIT | CONVERSION COEFFICIENTS (AREA RATIOS) FROM TOTALIZATION UNITS TO OUTPUT UNIT Q | | ESTIMATED PERSON-ENTRY-COUNTS IN RESPECTIVE TOTALIZATION UNITS |
|---|---|---|---|---|
| | OUTPUT UNIT Q | | | |
| OUTDOOR 2GHz/1.7GHz | A, B, C | A: 0.4, B: 0.1, C: 0.05 | | A: 100, B: 30, C: 100 |
| OUTDOOR 800MHz | D, E, F | D: 0.3, F: 0.3 | × | D: 10, F: 30 |
| INDOOR STATIONS (IMCS AND OTHERS) | J, K, L, M | L: 1.0 | | L: 10 |

ESTIMATED PERSON-ENTRY-COUNT IN OUTPUT UNIT Q (40+3+5)+(3+9)+10=70 (people)

EP 2 672 434 A1

## Fig.24

$$
\begin{pmatrix} Pop_{a_1} \\ Pop_{a_2} \\ Pop_{a_3} \\ \vdots \\ Pop_{a_n} \end{pmatrix} = \begin{pmatrix} k_{b_1 \to a_1} & k_{b_2 \to a_1} & k_{b_3 \to a_1} & \cdots & k_{b_m \to a_1} \\ k_{b_1 \to a_2} & k_{b_2 \to a_2} & k_{b_3 \to a_2} & \cdots & k_{b_m \to a_2} \\ k_{b_1 \to a_3} & k_{b_2 \to a_3} & k_{b_3 \to a_3} & \cdots & k_{b_m \to a_3} \\ \vdots & \vdots & \vdots & \ddots & \vdots \\ k_{b_1 \to a_n} & k_{b_2 \to a_n} & k_{b_3 \to a_n} & \cdots & k_{b_m \to a_n} \end{pmatrix} \begin{pmatrix} Pop_{b_1} \\ Pop_{b_2} \\ Pop_{b_3} \\ \vdots \\ Pop_{b_m} \end{pmatrix}
$$

CONVERSION COEFFICIENTS FOR 2 GHz/1.7 GHz OUTDOOR STATIONS

CONVERSION COEFFICIENTS FOR 800 MHz OUTDOOR STATIONS

CONVERSION COEFFICIENTS FOR INDOOR STATIONS

ESTIMATED PERSON-ENTRY-COUNTS FROM 2 GHz/1.7 GHz OUTDOOR STATIONS

ESTIMATED PERSON-ENTRY-COUNTS FROM 800 MHz OUTDOOR STATIONS

ESTIMATED PERSON-ENTRY-COUNT FROM INDOOR STATION

$Pop_{a_i}$ : ESTIMATED PERSON-ENTRY-COUNT IN OUTPUT UNIT $a_i$

$Pop_{b_j}$ : ESTIMATED PERSON-ENTRY-COUNT IN TOTALIZATION UNIT $b_j$

$k_{b_j \to a_i}$ : CONVERSION COEFFICIENTS FROM $b_j$ TO $a_i$

# Fig.25

**TERMINAL-ENTRY-COUNT ESTIMATION DEVICE** ~10

- LOCATION DATA STORAGE UNIT ~11
- EXTRACTION UNIT ~12
- OBSERVATION PERIOD ACQUISITION UNIT ~13
- OBSERVATION AREA ACQUISITION UNIT ~14
- ATTRIBUTE AND SCALING FACTOR STORAGE UNIT ~17A
- UNIDENTIFIABILITY SECURING UNIT ~30
- TERMINAL-ENTRY-COUNT ESTIMATION UNIT ~15
- SCALING FACTOR DERIVATION UNIT ~16
- LOCATION DATA ACQUISITION UNIT ~29
- PERSON-ENTRY-COUNT ESTIMATION UNIT ~18
- NUMBER-OF-ENTERING-PERSONS CALCULATION UNIT ~25
- CONVERSION UNIT ~28
- NUMBER-OF-OUT/IN-PERSONS CALCULATION UNIT ~27
- NUMBER-OF-LEAVING-PERSONS CALCULATION UNIT ~26
- OUTPUT UNIT ~19

EP 2 672 434 A1

# Fig.26

LOCATION DATA
- PHONE NUMBER ── → KEYED HASH FUNCTION ──→
- SECTOR ID
- TIME
- TRANSMISSION DELAY
- ESTIMATED COORDINATES
  ⋮

HASH KEY

(UNIDENTIFIABLE)
LOCATION DATA
- IRREVERSIBLE CODE
- SECTOR ID
- TIME
  HASH KEY
- TRANSMISSION DELAY
- ESTIMATED COORDINATES
  ⋮

ATTRIBUTE INFORMATION
- PHONE NUMBER ── → KEYED HASH FUNCTION ──→
- NAME ──→ X
- DATE OF BIRTH ──┐
- ADDRESS ────────┤ ROUNDING OF INFORMATION AND VALUES ──→
- GENDER
  ⋮

(UNIDENTIFIABLE)
ATTRIBUTE INFORMATION
- IRREVERSIBLE CODE
- (DELETED)
- AGE
- ADDRESS
  (NUMBERED SUBDIVISION OF AREA)
- GENDER
  ⋮

} INFORMATION WITHOUT IDENTIFICATION INFORMATION SUCH AS NAME, PHONE NUMBER, AND DATE OF BIRTH (UNIDENTIFIABLE INFORMATION)

EP 2 672 434 A1

**Fig.27**

# Fig.28

```
      ┌──────────────────────────┐
      │   CONCEALMENT PROCESS    │
      └──────────────────────────┘
                  │
                  │              ⌒S71
            ╱──────────────╲
          ╱   IS NUMBER OF   ╲
        ╱  SOURCE TERMINALS OF LOCATION DATA IN ╲    NO
       ⟨  EACH CELL AS FOUNDATION OF ESTIMATION  ⟩────────┐
        ╲      LESS THAN REFERENCE      ╱                 │
          ╲         VALUE?            ╱                    │
            ╲──────────────╱                               │
              │ YES    ⌒S72                    ⌒S73        │
      ┌──────────────────────┐   ┌────────────────────────────┐
      │  SET ESTIMATED VALUE │   │ PERFORM RANDOMIZED ROUNDING ON│
      │  ABOUT THE CELL TO ZERO│ │ ESTIMATED VALUE ABOUT THE CELL │
      └──────────────────────┘   └────────────────────────────┘
                  │                          │
                  │←─────────────────────────┘
          ┌──────────────────┐
          │     RETURN       │
          └──────────────────┘
```

61

# Fig.29

(a) DISTRIBUTION OF PERSON-ENTRY-COUNT

- 0-100 PEOPLE
- 101-200 PEOPLE
- 201-300 PEOPLE
- ⋮

(b) CHANGE OF PERSON-ENTRY-COUNT

PERSON-ENTRY-COUNT

TIME

(c) CHANGE OF CUMULATIVE PERSON-ENTRY-COUNT

CUMULATIVE PERSON-ENTRY-COUNT

TIME

(d) DISTRIBUTION OF NUMBER OF ENTERING PERSONS

- 0-20 PEOPLE
- 21-40 PEOPLE
- 41-60 PEOPLE
- ⋮

EP 2 672 434 A1

# Fig.30

SETUP EXAMPLE 1

TIME t0   TIME t1   TIME t2   TIME t3

TIME

R1
R2
R3
R4

SETUP EXAMPLE 2

R1
R2
R3
R4

TIME t0          TIME t1   TIME t2              TIME t3   TIME

EP 2 672 434 A1

**INTERNATIONAL SEARCH REPORT**

| International application No. |
|---|
| PCT/JP2012/051456 |

| A. CLASSIFICATION OF SUBJECT MATTER |
|---|
| *G06Q10/00*(2012.01)i, *H04M11/00*(2006.01)i |
| According to International Patent Classification (IPC) or to both national classification and IPC |

| B. FIELDS SEARCHED |
|---|
| Minimum documentation searched (classification system followed by classification symbols) |
| G06Q10/00, H04M11/00 |
| Documentation searched other than minimum documentation to the extent that such documents are included in the fields searched |
| Jitsuyo Shinan Koho       1922-1996    Jitsuyo Shinan Toroku Koho    1996-2012 <br> Kokai Jitsuyo Shinan Koho    1971-2012    Toroku Jitsuyo Shinan Koho    1994-2012 |
| Electronic data base consulted during the international search (name of data base and, where practicable, search terms used) |
| JSTPlus(JDreamII), JST7580(JDreamII) |

| C. DOCUMENTS CONSIDERED TO BE RELEVANT | | |
|---|---|---|
| Category* | Citation of document, with indication, where appropriate, of the relevant passages | Relevant to claim No. |
| X <br> Y <br> A | JP 2005-293242 A (Vodafone Kabushiki Kaisha), <br> 20 October 2005 (20.10.2005), <br> entire text; all drawings <br> (Family: none) | 1-6,25,26 <br> 10,11,15-24 <br> 7-9,12-14 |
| Y | JP 2003-122877 A (Oki Electric Industry Co., Ltd.), <br> 25 April 2003 (25.04.2003), <br> entire text; all drawings <br> (Family: none) | 10,11,15-24 |
| Y | JP 2010-250358 A (NTT Docomo Inc.), <br> 04 November 2010 (04.11.2010), <br> claim 8 <br> & WO 2010/116888 A1 | 15-24 |

| ☒   Further documents are listed in the continuation of Box C. | ☐   See patent family annex. |
|---|---|

| *   Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 09 February, 2012 (09.02.12) | 21 February, 2012 (21.02.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2012/051456 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2002-268950 A  (Sony Corp.),<br>20 September 2002 (20.09.2002),<br>entire text; all drawings<br>(Family: none) | 20,21 |
| Y | JP 2005-234866 A  (Nippon Telegraph and Telephone Corp.),<br>02 September 2005 (02.09.2005),<br>entire text; all drawings<br>(Family: none) | 22-24 |
| A | JP 4364936 B1  (Softbank BB Corp.),<br>28 August 2009 (28.08.2009),<br>entire text; all drawings<br>(Family: none) | 1-26 |
| A | JP 2010-244122 A  (NTT Docomo Inc.),<br>28 October 2010 (28.10.2010),<br>entire text; all drawings<br>& WO 2010/113758 A1 | 1-26 |
| A | JP 2003-288663 A  (Seiko Epson Corp.),<br>10 October 2003 (10.10.2003),<br>entire text; all drawings<br>(Family: none) | 1-26 |

Form PCT/ISA/210 (continuation of second sheet) (July 2009)

**REFERENCES CITED IN THE DESCRIPTION**

**Patent documents cited in the description**

• JP 2010033195 A